(19) Europäisches Patentamt
European Patent Office
Office européen des brevets

(11) **EP 1 671 518 B1**

(12) **EUROPÄISCHE PATENTSCHRIFT**

(45) Veröffentlichungstag und Bekanntmachung des Hinweises auf die Patenterteilung:
**12.08.2009  Patentblatt 2009/33**

(51) Int Cl.:
***H05B 3/03*** *(2006.01)*          ***C03B 5/425*** *(2006.01)*
***C03B 5/027*** *(2006.01)*          ***C03B 5/167*** *(2006.01)*

(21) Anmeldenummer: **04765847.1**

(22) Anmeldetag: **06.10.2004**

(86) Internationale Anmeldenummer:
**PCT/EP2004/011153**

(87) Internationale Veröffentlichungsnummer:
**WO 2005/036929 (21.04.2005 Gazette 2005/16)**

(54) **AGGREGAT FÜR KONDUKTIV BEHEIZBARES SCHMELZEN**

UNIT FOR MELTED MASSES THAT CAN BE HEATED BY CONDUCTION

UNITE POUR MATIERES FONDUES POUVANT ETRE CHAUFFEES PAR CONDUCTION

(84) Benannte Vertragsstaaten:
**CZ DE FR**

(30) Priorität: **06.10.2003  DE 10346337**

(43) Veröffentlichungstag der Anmeldung:
**21.06.2006  Patentblatt 2006/25**

(73) Patentinhaber: **Schott AG**
**55122 Mainz (DE)**

(72) Erfinder:
• **DUCH, Klaus-Dieter**
**65232 Taunusstein (DE)**
• **WEBER, Johann**
**65193 Wiesbaden (DE)**
• **OTT, Franz**
**95666 Mitterteich (DE)**

• **RÜHL, Robert**
**55130 Mainz (DE)**

(74) Vertreter: **Herden, Andreas F.**
**Blumbach - Zinngrebe**
**Patentanwälte**
**Alexandrastrasse 5**
**65187 Wiesbaden (DE)**

(56) Entgegenhaltungen:
**US-A- 3 409 725          US-A- 4 819 247**
**US-A- 5 151 918**

• **PATENT ABSTRACTS OF JAPAN Bd. 005, Nr. 160 (C-075), 15. Oktober 1981 (1981-10-15) & JP 56 092127 A (SASAKI GLASS KK), 25. Juli 1981 (1981-07-25)**

**Beschreibung**

Die Erfindung betrifft im Allgemeinen ein Aggregat, insbesondere ein Schmelz- und/oder Läuteraggregat und/oder ein Verteilersystem und/oder ein Rinnensystem, für konduktiv beheizbare Schmelzen und im Speziellen ein Aggregat für konduktiv beheizbare Glasschmelzen gemäß dem Oberbegriff des Anspruchs 1.

Bei der Herstellung von Gläsern fallen Glasschmelzen an, denen Wärmeenergie zugeführt wird. Dies betrifft den Prozess des Erschmelzens von Glas oder Glasscherben sowie auch nachgeschaltete Verfahrensschritte wie beispielsweise das Läutern oder das Homogenisieren. Die dafür erforderliche Wärmeenergie kann besonders effizient über den Joulschen Effekt direkt in der Schmelze freigesetzt werden.

In schmelztechnischen Anlagen, insbesondere zur Glasherstellung, sind daher häufig Elektroden im Einsatz, welche in die flüssige Schmelze eintauchen. Über die Elektroden wird elektrischer Strom in die Schmelze eingeleitet. Die Elektrodeneinheit umfasst dabei den Elektrodenkörper sowie einen diesen tragenden Elektrodenhalter. Der Elektrodenhalter und der Elektrodenkörper sind in der Regel fest miteinander verbunden, beispielsweise durch Verschrauben oder Schweißung. Der Elektrodenhalter seinerseits ist mit der äußeren Umgebung fest verbunden. Die US 4819247 zeigt eine Schmelzwanne, bei welcher die Wände ganzseitig zum Schutz mit Metallplatten ausgekleidet sind.

Elektroden werden sowohl im Boden, aber auch in den Seiten oder von oben eintauchend in die Schmelze eingesetzt. Die am häufigsten eingesetzte Elektrodenform ist der Stab, da dieser sehr leicht nachgeschoben werden kann. Zudem bietet die stabförmige Elektrode den Vorteil, dass die komplette Anordnung aus Elektrodenhalter und Elektrodenkörper auch bei laufender Anlage gewechselt werden kann. Bei Plattenelektroden dagegen ist weder ein Wechsel noch ein Nachschieben der Elektrode während des Betriebs möglich.

Gläser werden ab einer bestimmten Temperatur elektrisch leitfähig, so dass üblicherweise bei Spannungen bis etwa 1000 V ausreichend hohe Ströme fließen können, um die Glasschmelze über den Joulschen Effekt zu beheizen. In der Schmelze wird der Strom im Wesentlichen von den unterschiedlich beweglichen Ionen transportiert. Übliche Frequenzen zum konduktiven Beheizen von Schmelzen liegen bei 50 oder 60 Hz; bei hochwertigen Gläsern, insbesondere bei optischen Gläsern, werden Frequenzen von 10 kHz eingesetzt.

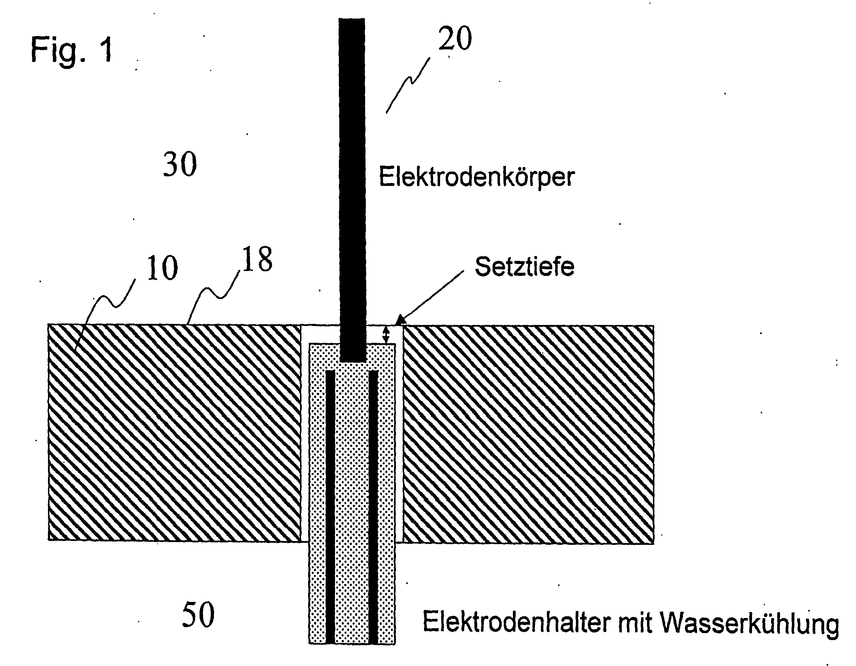

In Fig. 1 ist ein typischer Aufbau dargestellt, der illustriert, wie der Strom von außerhalb des Aggregats über eine Elektrode in die Schmelze eingespeist wird. Gezeigt ist ein Ausschnitt aus der Wand eines Schmelz und/oder Läuteraggregats mit einer Elektrodeneinheit. Die Anordnung umfasst einen in der Regel wassergekühlten Elektrodenhalter, in dem in geeigneter Form der eigentliche Elektrodenkörper befestigt ist. Der Elektrodenhalter ist außen über ein Kabel mit einem Heizkreistransformator verbunden. Die Elektrode wird durch die aus feuerfestem Material aufgebaute Wand in die Schmelze eingeführt. Der Abstand in Längsrichtung des Elektrodenhalters beziehungsweise Elektrodenkörpers von der der Schmelze zugewandten oberen Seite des Elektrodenhalters zu der der Schmelze zugewandten Oberfläche der Wand wird als Setztiefe bezeichnet. Die Setztiefe wird von der jeweiligen Glasart, insbesondere von deren Verglasüngs- und Kristallisationseigenschaften, sowie den erforderlichen Prozesstemperaturen und dem Aufbau der Wand, insbesondere der Wärmeleitfähigkeit der eingesetzten Materialien bestimmt.

Üblicherweise werden separate Elektrodensteine eingesetzt, in denen sich eine Bohrung für die Elektrode befindet. Der Elektrodenstein selbst wird in die Wand des Schmelz und/oder Läuteraggregats eingesetzt. Ein separater Elektrodenstein bietet den Vorteil, dass der Bereich um die Elektrode von außen gut beobachtet werden kann. So können Risse und Glasaustritte schnell erkannt werden. Wenn die Steinstärke aufgrund der Korrosion durch die Glasschmelze reduziert wird, kann von außen leicht eine Zwangskühlung angelegt werden, die effizient die zum Glas gerichtete Seite des Elektrodensteins kühlt und somit die durch die Glasschmelze verursachte Korrosion verringert.

Details können in der einschlägigen Fachliteratur zur Glastechnologie nachgelesen werden. Der Stand der Technik ist zum Beispiel in den Fortbildungsbänden der HVG "Elektroschmelzen von Glas" 1990 und "Wärmetransportprozesse bei der Herstellung und Formgebung von Glas" 2002 gut dokumentiert.

Der von außen von entsprechenden Anpass-Transformatoren über Zuleitungen eingespeiste Strom tritt vom Elektrodenkörper in die Glasschmelze ein, um diese durch den Joulschen Effekt zu erwärmen. Die elektrische Leistungsdichte $P_{el}(\bar{r})$ für die Gesamtanordnung aus Schmelze und Wandung errechnet sich bei den üblichen Abmessungen der Aggregate und Beheizungsfrequenzen dabei zu:

$$P_{el}(\bar{r}) = \bar{J}(\bar{r}) \cdot \bar{E}(\bar{r}) = \rho_{el}(T) \cdot \bar{J}^2(\bar{r}) = \sigma_{el}(T) \cdot \bar{E}^2(\bar{r}) \qquad (1)$$

wobei $P_{el}(\bar{r})$ die Dimension $\left[\dfrac{W}{m^3}\right]$ besitzt. $\bar{E}$ ist das elektrische Feld in $\left[\dfrac{V}{m}\right]$ und $\bar{J}$ die Stromdichte in $\left[\dfrac{A}{m^2}\right]$ an

jedem Ort $\vec{r}$ der betrachteten Anordnung. $\rho_{el}$ bezeichnet den spezifischen elektrischen Widerstand in [$\Omega$-$m$] und $\sigma_{el}$ die spezifische elektrische Leitfähigkeit der verwendeten Materialien in $\left[\dfrac{S}{m}\right]$.

Der spezifische elektrische Widerstand und die spezifische elektrische Leitfähigkeit sind temperaturabhängig. Bei den üblicherweise zum Einsatz kommenden Gläsern und Feuerfestmaterialien liegt in der Regel eine negative Temperaturabhängigkeit vor. Das bedeutet, dass die spezifische elektrische Leitfähigkeit mit steigender Temperatur zunimmt beziehungsweise der spezifische elektrische Widerstand abnimmt.

Die nach Gleichung 1 in die Gesamtanordnung eingetragene elektrische Leistungsdichte $P_{el}$ führt zunächst an jedem Punkt $\vec{r}$ zu einer Temperaturerhöhung $\Delta T$. In Glasschmelzen kann die aufgrund des Stromes generierte Wärmemenge $\dot{q}_{pel}$ in einem lokalen Volumenelement mit Hilfe von drei Mechanismen wieder aus diesem betrachteten Volumenelement abtransportiert werden.

Der erste Mechanismus ist die Wärmeleitung, die von Phononen vermittelt wird. Ihr ist ein $\dot{q}_{Wärmeleitung}$ zugeordnet. Der zweite Mechanismus zum Abtransport von Wärme aus einem betrachteten Volumenelement der Schmelze ist die Strahlung (Wärmestrom $\dot{q}_{strahlung}$), deren Austauschteilchen Photonen sind. Schließlich kann Wärme aus der Schmelze auch über Konvektionsströmungen durch einen Wärmestrom $\dot{q}_{konvektion}$ abtransportiert werden. Alle drei Mechanismen sind temperaturabhängig. In der Regel ist bis auf Ausnahmen bei sogenannten "dunklen" Gläsern die Strahlung der dominierende Prozess.

Nach der Phase des Anfahrens stellt sich ein stationärer Zustand bei einer bestimmten Temperatur $T_{eq}$ ein, bei welchem die beteiligten Wärmeströme im Gleichgewicht miteinander stehen. Im stationären Zustand bei $T = T_{eq}$ gilt:

$$\dot{q}_{Pel} = \dot{q}_{Strahlung} + \dot{q}_{Konvektion} + \dot{q}_{Wärmeleitung} \tag{2}$$

Nach dem Abtransport der durch den elektrischen Strom generierten Wärmemenge aus einem Volumenelement der Schmelze wird nun ein Volumenelement des Materials der Wand des Aggregats betrachtet. Die mit Glasschmelzen in Kontakt stehenden Feuerfestmaterialien können grob in drei Gruppen eingeteilt werden. Die sogenannten HZFC (High Zirconia fused cast)-Materialien, die bei Temperaturen um 2300˚C gegossen werden, werden ab 1900˚C bis 2000˚C weich. AZS (Alumina Zirconia Silica)-Materialien, deren Gießtemperaturen bei 1900˚C bis 2000˚C liegen, werden nicht weich, sondern sie zersetzen sich ab einer Temperatur oberhalb von etwa 1800˚C. ZS (Zirkon Silicat)-Materialien, die bei der Herstellung gepresst gesintert werden, zersetzen sich bereits ab 1700˚C. In jedem Fall führen hohe Übertemperaturen im Feuerfestmaterial zu dessen Zerstörung.

Viele Feuerfestmaterialien besitzen bei hohen Temperaturen eine mit Gläsern vergleichbare elektrische Leitfähigkeit. Im Feuerfestmaterial selbst kann die lokal durch den elektrischen Strom freigesetzte Wärmemenge im Gegensatz zum oben beschriebenen Sachverhalt für die Schmelze jedoch im Wesentlichen nur durch den Mechanismus der reinen Wärmeleitung abgeführt werden.

Ist im betrachteten Volumenelement die Wärmeabfuhr aus dem Feuerfestmaterial geringer als die in diesem Volumenelement generierte Wärmemenge $\dot{q}_{Pel}$, so wird die Temperatur ansteigen. Dies ist im betrachteten Volumenelement aufgrund der negativen Temperaturabhängigkeit des spezifischen elektrischen Widerstandes mit einer erhöhten elektrischen Leitfähigkeit verbunden. Bei konstanter Spannung und damit konstantem elektrischen Feld E ist mit einer steigenden spezifischen elektrischen Leitfähigkeit $\sigma_{el}$ (T) nach Gleichung 1 eine höhere elektrische Leistungsdichte $P_{el}$ ($\vec{r}$) verbunden. Die Temperatur steigt demnach weiter an. Dieser Prozess wiederholt sich solange, bis bei einer höheren Temperatur ein neuer Gleichgewichtszustand im Feuerfestmaterial der Aggregatwand erreicht wird.

In einem noch zu tolerierenden Fall wird lediglich die übliche Korrosion des Feuerfestmaterials aufgrund der höheren Temperatur beschleunigt. Die Lebensdauer des Aggregats wird dadurch verkürzt. Im ungünstigsten. Fall kommt es jedoch zu einer Entregelung des Systems mit der Konsequenz der Zerstörung von Bereichen des Feuerfestmaterials durch partielles Aufschmelzen oder rasche Zersetzung.

Bei Feuerfestmaterialien ist nicht nur der spezifische elektrische Widerstand im Neuzustand zu beachten, sondern auch die Möglichkeit, dass sich dieser während des Betriebs beispielsweise durch Eintrag von Glasbestandteilen vor allem durch Alkalidiffusion ändern kann. Das Material wird dadurch elektrisch leitfähiger. Damit erhöht sich die Gefahr von lokalen Instabilitäten im Feuerfestmaterial.

Sind die Temperaturen in der Wandung des Aggregats höher als in der Schmelze, so fungiert die Schmelze selbst als Kühlmedium für die Aggregatwand. Durch Anpassung der Isolation auf der Außenseite kann die Wärmeabfuhr aus der Wand verbessert werden. Das gleiche gilt für von außen angelegte Zwangskühlungen mit Luft.

Neben dem Vorteil der Verbesserung der Wärmeabfuhr aus der Wandlung bringen die genannten Maßnahmen jedoch gravierende Nachteile mit sich. Zwar wird die Gefahr von Übertemperaturen reduziert, die Kühlung oder verminderte Isolation bedeutet jedoch unnötigen zusätzlichen Wärmeverlust. Der Wirkungsgrad der gesamten Anlage wird dadurch erheblich in negativer Weise reduziert. Durch die veränderten Temperaturen und Wärmeströme können des Weiteren Strömungen in der Glasschmelze erzeugt werden, welche sich negativ auf die Qualität des Prozesses auswirken.

Die genannte Problematik wird vor allem durch das Material, aus dem der Elektrodenstein besteht, verursacht. Dieses Material sollte temperaturwechselbeständig sein, da in der Regel wassergekühlte Elektrodenhalter eingesetzt werden. Bei nachschiebbaren Elektroden wird während einer Wannenreise mehrfach die Wasserzufuhr zum Elektrodenhalter unterbrochen, so dass der Elektrodenstein sehr große Temperaturgradienten innerhalb eines kurzen Zeitraumes erfährt.

Beim Antempern der Anlage und/oder aufgrund der genannten hohen Temperaturgradienten können Risse in dem Elektrodenstein entstehen. Diese verlaufen in der Regel radial von der Elektrodenbohrung im Stein nach außen. In solch Risse kann Glas eindringen, wodurch die Korrosion des Elektrodensteins beschleunigt wird.

Daher sollte ein Steinmaterial gewählt werden, welches möglichst unempfindlich gegen Temperaturwechsel ist. Zu beachten sind jedoch auch andere Eigenschaften des Steines, wie dessen Korrosionsbeständigkeit gegen die Glasschmelze und der spezifische elektrische Widerstand.

Das ideale Feuerfestmaterial für einen Elektrodenstein sollte die folgenden Kriterien erfüllen. Es sollte eine nur geringe Neigung zur Korrosion bei Kontakt durch die zum Einsatz kommenden Schmelzen zeigen und eine gute Temperaturwechselbeständigkeit aufweisen. Zudem sollte der spezifische elektrische Widerstand in dem technologisch sinnvollen Temperaturbereich bedeutend höher als der der entsprechenden Schmelze sein. Idealerweise sollte das Material zudem eine hohe Wärmeleitfähigkeit besitzen, um auch geringe Mengen an freigesetzter elektrischer Energie im Feuerfestmaterial effizient abzuführen.

Viele Feuerfestmaterialien, die einen im Vergleich zu Glasschmelzen hohen spezifischen elektrischen Widerstand besitzen, zeigen jedoch eine schlechte Temperaturwechselbeständigkeit, wie beispielsweise das Zirkon Silikat Material ZS 1300. Dies ist um so kritischer, je höher der Temperaturgradient und dessen räumlicher Verlauf im Feuerfestmaterial ist. Scheiden Feuerfestmaterialien mit einem im Vergleich zur Schmelze hohen spezifischen elektrischen Widerstand aufgrund ihrer schlechten Korrosionsbeständigkeit gegenüber Glasschmelzen aus, muss man auf Materialien zurückgreifen, die gegenüber den Glasschmelzen resistenter sind aber unter Umständen eine höhere elektrische Leitfähigkeit aufweisen.

Aufgrund der erforderlichen Korrosionsbeständigkeit gegen die Schmelze, die Temperaturwechselbeständigkeit, der Verfügbarkeit und des Preises ist man bei der Wahl eines geeigneten Feuerfestmaterials sehr eingeschränkt.

Um die Gefahr von Übertemperaturen zu vermeiden, ist daher bisher als einzige sinnvolle Lösung lediglich die Anpassung der elektrischen Beheizung über die geeignete Wahl der Heizkreisgeometrien, der Phasenlagen und der Elektrodenpositionen in dem Schmelz- und/oder Läuteraggregat bekannt. Beispielsweise wird in der Studie "Elektrotechnische und wärmetechnische Untersuchungen zur Auswahl von Feuerfestmaterialien für Elektroschmelzöfen zur Glasschmelze" von H.-J. Illig et al., XI Internationaler Glaskongress, Prag 1977, Sammelband V, empfohlen, bei typischen Materialien für die Wanne eine maximale elektrische Feldstärke von 4-5 V/cm nicht zu überschreiten. Dadurch ist man jedoch im Hinblick auf die Fahrweise der Anlage stark eingeschränkt.

Eine Möglichkeit ist zum Beispiel der Übergang von Bodenelektroden zu sogenannten Topelektroden, die von oben in die Schmelze eintauchen und die nicht durch einen feuerfesten Aufbau geführt werden müssen.

Vielfach möchte man die elektrischen Heizkreise mit einer höheren Leistung und damit höheren Spannungen betreiben, um zum Beispiel höhere Durchsätze zu realisieren oder die Strömungen im Sinne der Glasqualität zu optimieren. Wenn bereits alle, insbesondere die oben dargestellten, Optimierungsoptionen ausgeschöpft sind, werden vielfach die Durchmesser der Elektrodenstäbe vergrößert, um die Stromdichten und damit die lokale Energiefreisetzung in der unmittelbaren Elektrodenumgebung zu beeinflussen. Eine solche Vergrößerung des Elektrodendurchmessers ist aber nicht beliebig möglich, da die Bohrungsgröße im Feuerfestmaterial beschränkt ist.

Die grundlegende Problematik der oben geschilderten Zusammenhänge liegt in der räumlich äußerst ungleichmäßigen Verteilung des Wärmeleistungseintrags in die Wand der Wanne, wodurch Zerstörungen des Feuerfestmaterials verursacht werden.

Aus den oben genannten Umständen ergibt sich daher eine Aufgabe der Erfindung, die Gefahr für Zerstörungen des Feuerfestmaterials, insbesondere durch Rissbildung und Korrosion, zu verringern.

Es ist eine weitere Aufgabe der Erfindung, lokale Unterschiede in der räumlichen Verteilung des Wärmeleistungseintrags in die Wand eines Aggregats abzubauen- Unter dem Begriff "Aggregat" werden alle Anordnungen verstanden, in denen die Schmelze hergestellt, behandelt und/oder transportiert wird. Insbesondere wird mit dem Begriff "Aggregat" ein Schmelz- und/oder Läuteraggregat und/oder ein Verteilersytem und/oder ein Rinnensystem bezeichnet.

In diesem Zusammenhang bildet der Abbau lokaler Unterschiede in der räumlichen Verteilung des elektrischen Feldes in der Wand des Aggregats eine weitere Aufgabe der Erfindung.

Zudem ist es eine Aufgabe der Erfindung, lokale Unterschiede in der Temperaturverteilung in der Wand abzubauen.

Des Weiteren ist es eine Aufgabe der Erfindung, die Lebensdauer des Aggregats zu erhöhen und den Wirkungsgrad der Anlage zu steigern.

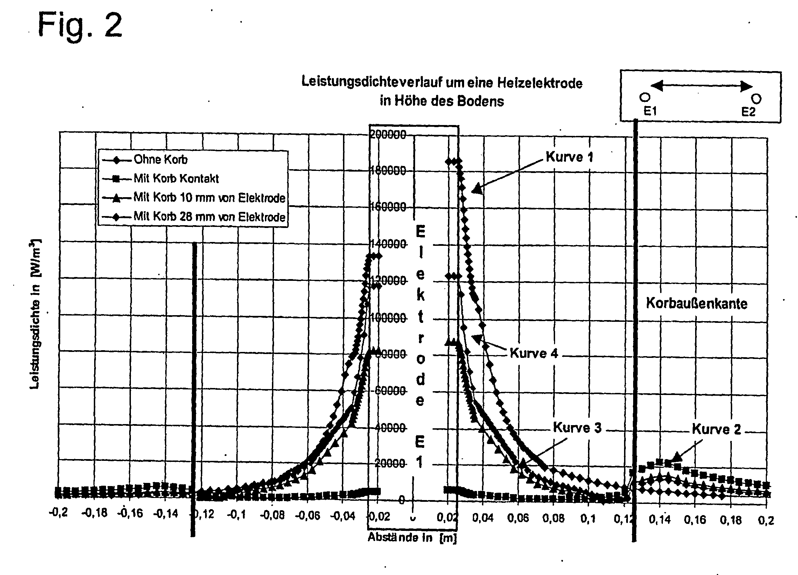

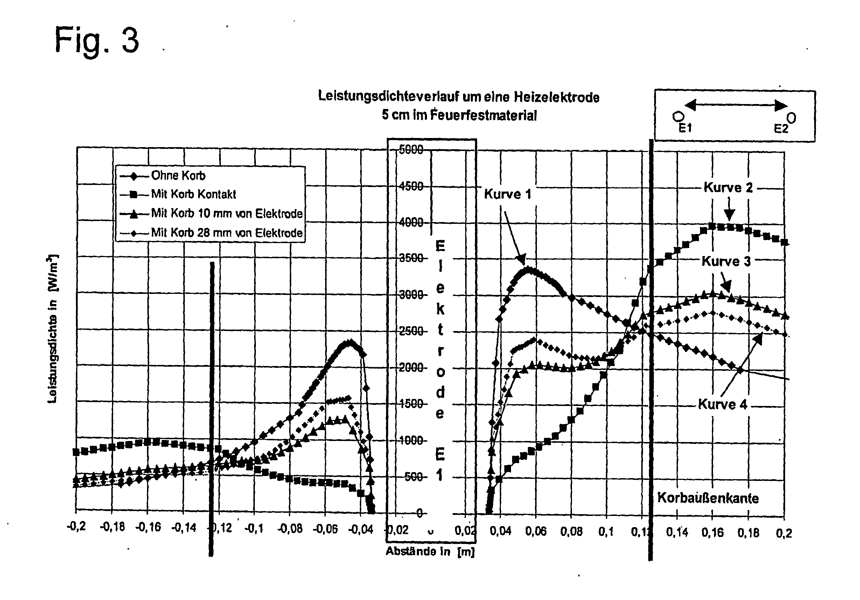

In den Diagrammen in den Figuren 2 und 3 sind Ergebnisse einer mathematischen Simulation der Elektrodenumgebung gezeigt. Dabei wurde für die spezifischen elektrischen Widerstände

$$\rho_{elFeuerfest} = 2,5 \quad \rho_{elGlas} \; ; \; (\rho_{elGlas} = 20 \; \Omega \quad cm)$$

als Randbedingung vorgegeben, da dieses Verhältnis in vielen realen Schmelzaggregaten üblich ist. Das Diagramm in Figur 2 zeigt die Leistungsdichte am Übergang zwischen der Wand der Wanne und der Glasschmelze; das Diagramm in Figur 3 zeigt die Leistungsdichte in 5 cm Tiefe im Feuerfestmaterial der Wand.

Betrachtet wurden damit besonders kritische Bereiche, in deren Nähe erfahrungsgemäß Feuerfestzerstörungen stattfinden können.

In unmittelbarer Umgebung der Elektrode treten die höchsten Energiekonzentrationen aufgrund des hohen elektrischen Feldgradienten auf. Auf Basis dieser Tatsache löst die Erfindung die genannten Aufgaben auf höchst überraschend einfache Weise bereits mit einem Aggregat mit den Merkmalen des Anspruchs 1.

Die Erfindung sieht ein Aggregat, insbesondere ein Schmelz- und/oder Läuteraggregat und/oder Verteilersystem und/oder Rinnensystem, für konduktiv beheizbare Schmelzen, insbesondere Glasschmelzen vor, welches eine Wanne und zumindest eine Elektrode aufweist, wobei die Elektrode durch eine Öffnung in einer Wand der Wanne hindurch in die konduktiv beheizbare Schmelze eintaucht, wobei das Aggregat eine Vorrichtung zum Vermindern des lokalen Wärmeleistungseintrags in zumindest einem der Elektrode benachbarten Bereich der Wand aufweist.

Durch den Einsatz der Vorrichtung zum Vermindern des lokalen Wärmeleistungseintrags in zumindest einem der Elektrode benachbarten Bereich der Wand wird in vorteilhafter Weise die lokale Überhöhung des Wärmeleistungseintrags in diesem Bereich im Vergleich mit der übrigen Wand abgebaut. Dadurch können außerdem lokale Unterschiede in der räumlichen Temperaturverteilung der Wand abgebaut werden. Somit können mit Hilfe der Erfindung die Ursachen für Zerstörungen des Feuerfestmaterials der Wand in erheblichem Ausmaße reduziert wenn nicht gar gänzlich vermieden werden.

Vorteilhafte Weiterbildungen der Erfindung finden sich in den zugeordneten Unteransprüchen.

Um den lokalen Wärmeleistungseintrag auf besonders einfache Weise vermindern zu können, umfasst die erfindungsgemäße Vorrichtung zumindest eine Abschirmeinrichtung.

Mit dem Begriff "Abschirmeinrichtung" wird hier ganz allgemein eine Einrichtung bezeichnet, mit welcher Temperaturüberhöhungen aufgrund eines lokalen Maximums in der räumlichen Verteilung des Leistungsdichtefeldes abgebaut werden können.

Um die vorteilhafte Anpassung der Materialeigenschaften in dem der Elektrode benachbarten kritischen Bereich der Wand auf besonders einfache Weise vornehmen zu können, kann ein Abschirmeinrichtung einen Elektrodenstein aus einem ersten Material und zumindest eine sich an den Elektrodenstein anschließende Isoliereinrichtung umfasst.

Der Begriff "Isoliereinrichtung" bezieht sich in diesem Zusammenhang auf die Wärmeisolierung nach außen.

Eine vorteilhafterweise mit geringem konstruktiven Aufwand verbundene Anordnung der Abschirmeinrichtung sieht einen schichtweisen Aufbau derselben vor, wobei der Elektrodenstein eine Schicht und die Isoliereinrichtung zumindest eine weitere Schicht bildet.

Indem zumindest eine Schicht der Isoliereinrichtung eine Halterung für den Elektrodenstein bildet, bietet die Erfindung den Vorteil, dass Risse im Elektrodenstein aufgrund der oben erläuterten Zerstörungsmechanismen bei der erfindungsgemäßen Vorrichtung nicht zu einem Ausfall des Systems führen. Da die zumindest eine Schicht der Isoliereinrichtung den Elektrodenstein in jedem Fall zuverlässig hält, ist kein Ausfall eines kompletten Wandbereiches mehr zu befürchten.

Der Elektrodenstein umfasst zumindest ein erstes Feuerfestmaterial. Dieses Material kann in optimaler Weise auf die Anforderungen für das ideale Feuerfestmaterial eines Elektrodensteins angepasst werden. Die erfindungsgemäße Kombination mit der Isoliereinrichtung führt dabei zu einem geringeren Platzbedarf des eigentlichen Elektrodensteins. Damit sind die weiteren Vorteil eines verminderten Materialeinsatzes dieses zwar optimal an die Anforderungen angepassten, aber in der Regel teuren Materials und somit eine erhebliche Kostenreduzierung verbunden.

Die Isoliereinrichtung umfasst zumindest ein zweites Feuerfestmaterial. Dieses zumindest eine zweite Feuerfestmaterial dient in vorteilhafter Weise der Wärmeisolation und reduziert dadurch den Temperaturgradienten im ersten Feuerfestmaterial des Elektrodensteins. So werden die Anforderungen an die Temperaturwechselbeständigkeit des ersten Feuerfestmaterials des Elektrodensteins in vorteilhafter Weise deutlich vermindert. Die Erfindung begegnet damit den Nachteilen der Feuerfestmaterialien, welche einen im Vergleich zu Glasschmelzen hohen spezifischen elektrischen Widerstand besitzen, aber eine schlechte Temperaturwechselbeständigkeit aufweisen.

Im Hinblick auf die Lebensdauer der Anlage ist es jedoch besonders vorteilhaft, wenn der Elektrodenstein und die Isoliereinrichtung eine hohe Temperaturwechselbeständigkeit aufweisen. Zudem wird eine Ausführungsform bevorzugt, bei welcher das Feuerfestmaterial des Elektrodensteins und/oder das Feuerfestmaterial der Isoliereinrichtung korrosionsbeständig gegenüber der Schmelze ist.

Vorteilhafterweise bietet sich die Möglichkeit, dass für das Feuerfestmaterial der Isoliereinrichtung ein Material mit einer höheren elektrischen Leitfähigkeit als die des zumindest einen Feuerfestmaterials des Elektrodensteins eingesetzt werden kann. Diese Möglichkeit entsteht durch eine Anordnung der Isoliereinrichtung in schichtweisem Aufbau mit dem Elektrodenstein, weil die Isoliereinrichtung damit weiter von der Elektrode entfernt plaziert wird.

Die einzige Einschränkung in Bezug auf die elektrische Leitfähigkeit bildet die elektrische Leitfähigkeit beziehungsweise der spezifische elektrische Widerstand der Glasschmelze selbst. Um einen störungsfreien Betrieb sicherzustellen, ist in vorteilhafter Weise vorgesehen, dass der spezifische elektrische Widerstand $P_{el, Feuerfest}$ des zumindest einen Feuerfestmaterials der Isoliereinrichtung, welches Glaskontakt besitzt, und des zumindest einen Feuerfestmaterials des Elektrodensteins höher ist als der spezifische elektrische Widerstand $\rho_{el, Schmelze}$ der Schmelze.

In einer besonders bevorzugten Ausführungsform hat der spezifische elektrische Widerstand $\rho_{el, Feuerfest}$ des zumindest einen Feuerfestmaterials der Isoliereinrichtung, welches Glaskontakt besitzt in Bezug auf den spezifischen elektrischen Widerstand $\rho_{el, Schmelze}$ der Schmelze einen Wert von mindestens $\rho_{el, Feuerfest} = 1{,}5 \cdot \rho_{el, Schmelze}$, und des zumindest einen Feuerfestmaterials des Elektrodensteins insbesondere einen Wert von $\rho_{el, Feuerfest} = 10 \cdot \rho_{el, Schmelze}$.

Mit Vorteilen für die Lebensdauer der eingesetzten Materialien wird die Wandstärke d des Elektrodensteins an einen wählbaren oberen Grenzwert des elektrischen Feldgradienten $\Delta E_{1,2}$ am Übergang von dem Elektrodenstein zu der zumindest einen Schicht der Isoliereinrichtung angepasst. Beträgt der obere Grenzwert des elektrischen Feldgradienten $\Delta E_{1,2}$ am Übergang von dem Elektrodenstein zu der zumindest einen Schicht der Isoliereinrichtung zum Beispiel $\Delta E_{1,2} = 5$ V/cm, kann eine hohe Heizleistung eingekoppelt werden. Gleichzeitig werden dabei in vorteilhafter Weise die eingesetzten Materialien im Wesentlichen nicht geschädigt.

Um die Elektrode zuverlässig nachschieben zu können, und/oder im Spalt zwischen der Elektrode und dem Feuerfestmaterial eine stabile Verglasung der Schmelze zu erreichen, ist in vorteilhafter Weise vorgesehen, dass die Breite des Spaltes zwischen der Elektrode und dem Feuerfestmaterial $b_{sp}$ einen Wert im Bereich von $0 \text{ mm} \leq b_{sp} \leq 30$ mm aufweist.

In einer besonders bevorzugten Ausführungsform weist die Breite des Spaltes zwischen Elektrode und Feuerfestmaterial $b_{sp}$ einen Wert im Bereich von $2 \text{ mm} \leq b_{sp} \leq 5 \text{ mm}$ auf.

Außer wie oben beschrieben an einen wählbaren oberen Grenzwert des elektrischen Feldgradienten $\Delta E_{1,2}$ wird die Wandstärke d des Elektrodensteins im Hinblick auf eine ausreichende Festigkeit des Elektrodensteins auf die Weite b der Öffnung im Elektrodenstein abgestimmt.

Erfindungsgemäß beträgt die Wandstärke d mindestens das Doppelte der Weite b der Öffnung im Elektrodenstein.

In einer bevorzugten Ausführungsform hat die Wandstärke d des Elektrodensteins einen Wert bis 500 mm.

In einer besonders bevorzugten Ausführungsform hat die Wandstärke d des Elektrodensteins einen Wert im Bereich von $75 \text{ mm} \leq b \leq 150 \text{ mm}$. So kann bei möglichst geringem Materialverbrauch und damit geringen Kosten gleichzeitig vorteilhafter Weise eine ausreichende Festigkeit und damit Lebensdauer des Elektrodensteins sichergestellt werden.

In diesem Zusammenhang hat es sich als vorteilhaft erwiesen, wenn die Höhe h des Elektrodensteins einen Wert im Bereich von $20 \text{ mm} \leq h \leq 300 \text{ mm}$ aufweist.

Bei der Wahl der Höhe h ist die Gesamtdicke und Tragfähigkeit der Feuerfestmaterialien der Isoliereinrichtung zu beachten.

In einer besonders bevorzugten Ausführungsform weist die Höhe h des Elektrodensteins einen Wert im Bereich von $75 \text{ mm} \leq h \leq 150 \text{ mm}$ auf.

Neben dem Vorteil einer ausreichend hohen Festigkeit des Elektrodensteins bei möglichst geringem Materialverbrauch und den entsprechenden Abmessungen sind im Hinblick auf die Form des Elektrodensteins die Bearbeitungskosten zu beachten.

Grundsätzlich sind jede beliebige Form und Oberflächengüte möglich.

In einer bevorzugten Ausführungsform ist der Elektrodenstein rechteckig geformt und bietet somit den Vorteil, mit besonders geringem Aufwand und damit vorteilhaft niedrigen Bearbeitungskosten hergestellt werden zu können.

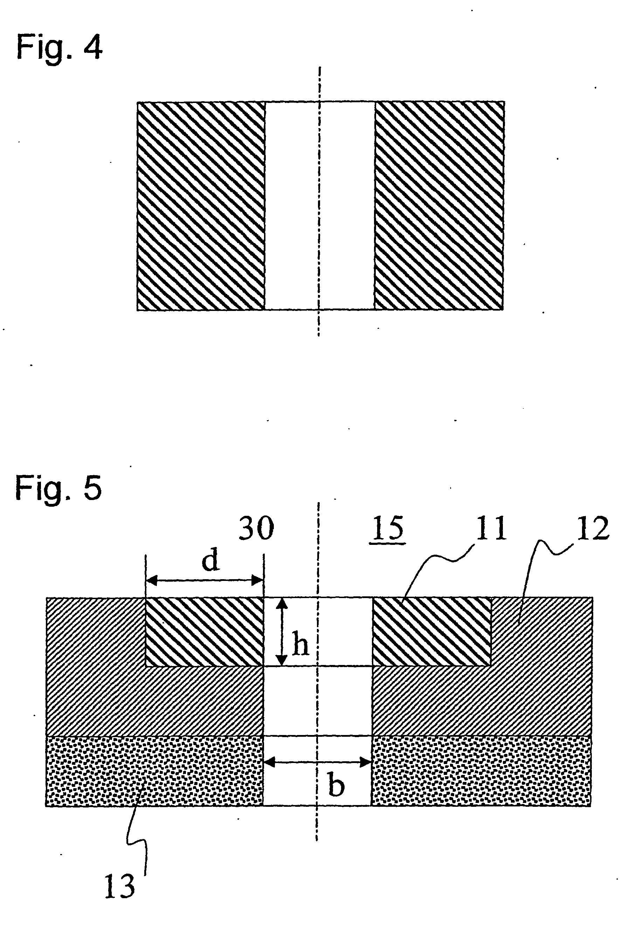

Bei der hier vorgestellten Ausführungsform wird von dem Feuerfestmaterial des Elektrodensteins nur so viel eingesetzt wie von den elektrischen Bedingungen her notwendig ist. Bei dessen Auswahl kann daher auch auf ein Material zurückgegriffen werden, welches ein größeres Glasfehlerbildungspotential aufweist als zum Beispiel das Feuerfestmaterial der Isoliereinrichtung, welches Glaskontakt besitzt. Hier spielen der Gesamtdurchsatz und damit der Verdünnungseffekt eine wesentliche Rolle. Es sind vielfach Anlagen in Betrieb, bei denen der gesamte Boden und nicht nur die unmittelbare Umgebung der Elektroden mit dem Feuerfestmaterial des Elektrodensteins ausgelegt ist (analog Figur 4).

Nach den Überlegungen und Erfahrungen der Erfinden gibt es insbesondere zwei bevorzugte Möglichkeiten, das Feuerfestmaterial des Elektrodensteins in das Feuerfestmaterial der Isoliereinrichtung einzufügen.

Zum einen können die entsprechenden Kontaktflächen sehr sauber geschliffen werden, so dass im wesentlichen keine Fugen auftreten. Alternativ können definierte Fugen mit einem elektrisch schlecht leitfähigen Glas beziehungsweise Glaspulver gefüllt werden, welches darüber hinaus bei den gewünschten Einsatztemperaturen hochviskos ist, so dass es vom Produktionsglas nicht ausgespült werden kann. Dieses Glas kann zudem als sogenannte Alkalidiffusionsperre für die Steinmaterialien 1 und 2 gelten. Der Spalt kann insbesondere 0,5 mm bis 10 mm breit sein, wobei sich ein Wert im Bereich von 1 mm bis 2 mm als vorteilhaft herausgestellt hat. Das Verhältnis der spezifischen elektrischen Widerstände sollte vorzugsweise $\rho_{el\ Glas\ Spalt}$ / $\rho_{el\ Gla} \geq 10$ sein.

Vorzugsweise findet die hier vorgestellte Ausführungsform bei Bodenelektroden Anwendung. Bei geeigneter Dimensionierung und Verspannung der Anordnung ist sie auch bei Seitenelektroden einsetzbar.

Für den Elektrodenstein sind besonders die hoch zirkonsilicathaltigen Materialien wie beispielsweise ZS 1300 oder ähnliche Materialien geeignet, da diese in den meisten Glasschmelzen eine ausreichende Korrosionsbeständigkeit aufweisen. Bei der Isoliereinrichtung in Glaskontakt sind die Materialien mit einem hohen Anteil an Zirkonoxid wie zum Beispiel ZBX 950 geeignet, wobei die elektrische Leitfähigkeit gegenüber der Glasschmelze berücksichtigt werden muss. Ist der Glasangriff tolerabel, sind auch AZS-Materialien wie ZAC 1711 einsetzbar. Für die zweite oder folgenden Schichten der Isoliereinrichtung sind alle Materialien denkbar, die für die an der Grenzfläche Material 1 zu 2 herrschenden Temperaturen geeignet sind.

Neben der oben beschriebenen Vorrichtung zum Vermindern des lokalen Wärmeleistungseintrags in zumindest einen der Elektrode benachbarten Bereich der Wand, bei welcher die Abschirmeinrichtung in einem der Elektrode benachbarten Bereich angeordnet ist, sieht die Erfindung in einer erfindungsgemäßen Ausführungsform vor, dass die Abschirmeinrichtung in einem der Elektrode benachbarten Bereich der Schmelze angeordnet ist.

Mit dieser weiteren Möglichkeit zur Anordnung der Abschirmeinrichtung stellt die Erfindung in vorteilhafter Weise die Möglichkeit zur Verfügung, auch dann Einfluss auf den lokalen Wärmeleistungseintrag in zumindest einem der Elektrode benachbarten Bereich der Wand nehmen zu können, wenn der erfindungsgemäße Aufbau der Abschirmeinrichtung aus Elektrodenstein und Isoliereinrichtung, insbesondere aus konstruktiven Gründen, nicht möglich ist.

Die Anordnung einer erfindungsgemäßen Abschirmeinrichtung in einem der Elektrode benachbarten Bereich der Schmelze ermöglicht zudem das Nachrüsten bereits vorhandener Aggregate mit einer erfindungsgemäßen Abschirmvorrichtung und das Erreichen der damit verbundenen Vorteile.

Um die hohen Energiedichten in unmittelbarer Nachbarschaft der Elektrode zu reduzieren, umfasst die Abschirmeinrichtung gemäß der erfindungsgemäßen Ausführung einen Abschirmkorb.

Durch einen sogenannten Abschirmkorb können hohe Energiedichten in unmittelbarer Nachbarschaft zur Elektrode reduziert werden. Im Inneren eines solchen Abschirmkorbes wird der hohe elektrische Feldgradient reduziert, der im unmittelbar benachbarten Bereich der Elektrode auftritt, und der nach Gleichung 1 zu den hohen Energiekonzentrationen in diesem Bereich führt. Damit wird im Vergleich zu einer Anordnung ohne Abschirmkorb der Wärmeleistungseintrag reduziert.

Um den Abschirmkorb in vorteilhafter Weise in einem der Elektrode benachbarten Bereiche der Schmelze anordnen zu können, weist der Abschirmkorb eine Öffnung auf, durch welche die Elektrode hindurchgeführt werden kann, wobei das Lot durch diese Öffnung die Achse des Abschirmkorbes definiert.

Ist die Öffnung des Abschirmkorbes in einer oberen Begrenzung des Abschirmkorbes angeordnet, kann vorteilhafterweise bei einfachem konstruktivem Aufbau ein großer Bereich der Elektrode von dem Abschirmkorb umgeben sein. In einer bevorzugten Ausführungsform ist der Abschirmkorb koaxial zu der Elektrode angeordnet. So können die in dem der Elektrode benachbarten Bereich ansonsten stark überhöhten Werte des elektrischen Feldgradienten und damit des Wärmeleistungseintrages und der Temperatur räumlich gleichmäßig abgebaut werden.

Dieser Vorteil kann insbesondere dann in großem Umfang ausgeschöpft werden, wenn der Abschirmkorb eine rotationssymmetrische Gestalt aufweist. Die Symmetrieachse bildet dabei die Achse des Abschirmkorbes. Neben einer kreisrunden Gestalt bietet aber auch eine ovale Gestalt des Abschirmkorbes in einer Ebene senkrecht zu seiner Achse die oben genannten Vorteile.

Generell kann der Abschirmkorb auch mehrere Seiten aufweisen, insbesondere mit eckigen Übergängen, welche jedoch auch abgerundet sein können. Zu bevorzugen ist dabei jeweils die unter gegebenen Bedingungen einer eventuell vorhandenen Anlage am günstigsten zu fertigende Variante. Der Abschirmkorb kann insbesondere aus mehreren Teilen zusammengesetzt sein, welche miteinander verbunden, insbesondere verschraubt, verschweißt oder durch andere Fügeverfahren verbunden sind.

Eine in vorteilhafter Weise einfache konstruktive Gestaltung des Abschirmkorbes ist gegeben, wenn die obere Begrenzung des Abschirmkorbes einstückig ist. In diesem Fall kann beispielsweise eine Platte mit einer Öffnung für die Elektrode als obere Begrenzung des Abschirmkorbes eingesetzt werden. Dann kann die Schmelze bei entsprechender Gestaltung der seitlichen Begrenzungen des Abschirmkorbes mehr oder weniger im Korbbereich eingeschlossen sein.

Ist ein nahezu ungehinderter Glasaustausch gewünscht, stellt die Erfindung einen Abschirmkorb zur Verfügung, welcher zwei Ränder aufweist, die durch Elemente verbunden werden können, wobei zumindest ein Rand die obere Begrenzung bildet. Diese Ausführungsform umfasst beispielsweise einen käfigartigen Aufbau aus zwei Ringen, welche durch Stege miteinander verbunden sind.

Der Radius der Ringe kann dabei unterschiedlich sein. Beispielsweise kann ein Rand in größerem Abstand von der Öffnung angeordnet sein, durch die die Elektrode durch die Wand des Aggregats durchgeführt wird. Dieser Rand kann insbesondere einen kleineren Radius haben als der andere Rand, der dann eine untere Begrenzung bildet. Die Stege stellen dann seitliche Begrenzungen des Korbes dar, so dass ein kegelförmiger Abschirmkorb gebildet wird.

Die Ränder und die sie verbindenden Elemente können jedoch auch je nach den Anforderungen an die zu erzielende räumliche Verteilung des elektrischen Wärmeleistungseintrags in beliebiger anderer Weise dimensioniert und angeordnet sein.

Gemäß einer bevorzugten Ausführungsform bildet die Längsachse der Elemente einen Winkel W mit der der Schmelze zugewandten Oberfläche des der Elektrode benachbarten Bereiches der Wand.

Der Winkel W weist insbesondere einen Wert im Bereich von $0° < W = 90°$ auf. Eine vorteilhafte Abschirmwirkung kann insbesondere dann erzielt werden, wenn der Winkel W einen Wert im Bereich von $30° \leq W \leq 60°$ aufweist.

Um eine möglicherweise konstruktiv aufwändige Befestigung des Abschirmkorbes im Feuerfestmaterial zu umgehen, sieht die Erfindung vorteilhafter Weise vor, dass der Abschirmkorb an der Elektrode befestigbar ist. In diesem Fall wird davon ausgegangen, dass ein Nachschieben der Elektrode während einer Wannenreise nicht notwendig ist und man beispielsweise während des Auftemperns die Elektrode und den Korb geeignet vor Oxidation schützen kann. Wird der Abschirmkorb an der Elektrode befestigt, ist die Elektrode bereits auf die endgültige Setztiefe einzubauen.

Muss insbesondere aufgrund des Risikos eines Abbrechens des Elektrodenstabes während des Betriebes oder aufgrund von Problemen mit dem Oxidationsschutz während der Auftemperphase die Möglichkeit eines Nachschiebens des Elektrodenkörpers gegeben bleiben, kann der Abschirmkorb in der Glasschmelze ohne direkten Kontakt zum Elektrodenkörper angeordnet werden.

Das Problem einer zu hohen Stromdichte im Zwischenraum kann man umgehen, wenn man den Abschirmkorb in geeigneter Weise durch die Feuerfestwand mit dem Außenbereich verbindet. In diesem Fall werden die Heizelektrode und der Korb auf der kalten Außenseite auf gleiches elektrisches Potential gelegt.

Eine Befestigung des Abschirmkorbes an dem Elektrodenkörper selbst macht in vorteilhafter Weise den Einsatz des Abschirmkorbes auch bei sogenannten Topelektroden, die von oben in die Glasschmelze eintauchen, möglich. Im letzteren Fall geschieht dies zur gezielten Einstellung der Leistungsfreisetzung in der Elektrodenstabumgebung.

Ansonsten wird der erfindungsgemäße Abschirmkorb bevorzugt bei Bodenelektroden eingesetzt. Um vorteilhafterweise einen Einsatz auch bei Seitenelektroden zu ermöglichen, bietet die Erfindung zudem die Möglichkeit, den Abschirmkorb an der Wand befestigbar zu gestalten.

Es sind darüber hinaus denkbar, geeignete Vorrichtungen, wie Keile oder Kugeln, die sowohl ein Nachschieben als auch einen innigen Kontakt zwischen Stab und Korb ermöglichen am "Korb" selbst anzubringen. Bei dem Einsatz dieser Vorrichtungen ist erfindungsgemäß aber die Korrosion der entsprechenden Refraktärmetalle durch die Glasschmelze sehr gering.

Um für eine effiziente Erwärmung der Schmelze besonders hohe Stromdichten ohne Gefahr für die eingesetzten Materialien einbringen zu können, sieht die Erfindung vor, dass der Abschirmkorb Mo und/oder W und/oder $SnO_2$ und/oder zumindest ein Edelmetall und/oder zumindest eine Legierung der vorgenannten Materialien und/oder hochwarmfeste Stähle umfasst.

Aufgrund der Ausführung des Korbes, insbesondere seiner Kontur, seiner Höhe oder weiteren Parametern, ist eine unterschiedliche Leistungsfreisetzung in der Umgebung der Elektrode einstellbar, was direkt auf das Strömungsfeld der Gesamtanordnung rückkoppelt.

Im Hinblick auf eine ausreichende mechanische Festigkeit des Abschirmkorbes bei gleichzeitiger hoher Wirksamkeit in Bezug auf das Sicherstellen einer gleichmäßigen räumlichen Verteilung des Wärmeleistungseintrags in die Wand haben sich bestimmte Dimensionierungen der Längenabmessungen als besonders vorteilhaft erwiesen.

Die Erfindung sieht insbesondere vor, dass das Verhältnis der Länge des in die Schmelze eintauchenden Elektrodenkörpers $L_{EK}$ zu der Höhe $H_K$ des Abschirmkorbes einen Wert im Bereich von $1 \leq L_{EK}/H_K \leq 20$ aufweist. In einer besonders bevorzugten Ausführungsform weist das Verhältnis der Länge des in die Schmelze eintauchenden Elektrodenkörpers $L_{EK}$ zu der Höhe $H_K$ des Abschirmkorbes einen Wert im Bereich von

$$2 \leq L_{EK}/H_K \leq 5$$

auf.

Das Verhältnis des äußeren Radius $R_K$ des Abschirmkorbes zum Radius $R_{EL}$ des Elektrodenkörpers weist vorteilhafter Weise einen Wert im Bereich von $2 \leq R_K/R_{EL} \leq 15$ auf. Nach einer besonders bevorzugten Ausführungsform beträgt das Verhältnis des äußeren Radius $R_K$ des Abschirmkorbes zum Radius $R_{EL}$ des Elektrodenkörpers einen Wert im Bereich von $3 \leq R_K/R_{EL} \leq 7$.

Das Verhältnis des Abstandes $D_{HK}$ zweier Elektroden zueinander zum äußeren Radius $R_K$ des Abschirmkorbes weist erfindungsgemäß vorteilhafterweise einen Wert im Bereich von $3 \leq D_{HK}/R_K \leq 500$ auf. Nach einer besonders bevorzugten Ausführungsform beträgt das Verhältnis des Abstandes $D_{HK}$ zweier Elektroden zueinander zum äußeren Radius $R_K$ des Abschirmkorbes einen Wert im Bereich von $20 \leq D_{HK}/R_K \leq 80$.

Die Breite $l_K$ des oberen Randes des Abschirmkorbes weist erfindungsgemäß einen Wert im Bereich von $0 \leq l_K \leq R_K$ auf. Nach einer besonders bevorzugten Ausführungsform liegt der Wert für die Breite des $l_K$ des oberen Randes des Abschirmkorbes im Bereich von $0 \leq l_K \leq 1/3\ R_K$.

Die Breite a des Spaltes zwischen Elektrodenkörper und innerer Begrenzung der Öffnung des Abschirmkorbes weist einen Wert im Bereich von $0 \leq a \leq 50$ mm auf. Gemäß einer besonders bevorzugten Ausführungsform weist die Breite a des Spaltes zwischen Elektrodenkörper und innerer Begrenzung der Öffnung des Abschirmkorbes einen Wert im Bereich von $0$ mm $\leq a \leq 30$ mm auf.

Die Materialstärke $d_K$ der Komponenten des Abschirmkorbes weist einen Wert im Bereich von $5$ mm $\leq d_K \leq 50$ mm auf. Die Breite $b_{SP}$ des Spaltes zwischen Elektrodenkörper und innerer Begrenzung der Öffnung der Wand weist einen Wert im Bereich von $1$ mm $\leq b_{SP} \leq 30$ mm auf.

Nach einer besonders bevorzugten Ausführungsform hat die Breite $b_{SP}$ des Spaltes zwischen Elektrodenkörper und innerer Begrenzung der Öffnung der Wand einen Wert im Bereich von

$$2\ \text{mm} \leq b_{SP} \leq 5\ \text{mm}.$$

Die Dicke $D_{FF}$ des mit der Schmelze in Kontakt stehenden Materials der Wand weist einen Wert im Bereich von $50$ mm $\leq D_{FF} \leq 500$ mm auf. Nach einer besonders bevorzugten Ausführungsform beträgt der Wert für die Dicke $D_{FF}$ des mit der Schmelze in Kontakt stehenden Materials der Wand

$$100\ \text{mm} \leq D_{FF} \leq 300\ \text{mm}.$$

Um einen sicheren Betrieb des erfindungsgemäßen Schmelz- und/oder Läuteraggregats unter Verwendung zumindest eines Abschirmkorbes zu gewährleisten, sieht die Erfindung in vorteilhafter Weise vor, dass das Verhältnis des spezifischen elektrischen Widerstandes $\rho_{el,Feuerfest}$ des zumindest einen Feuerfestmaterials der Wand und/oder des zumindest einen Feuerfestmaterials des Elektrodensteins und/oder des zumindest einen Feuerfestmaterials der Isoliereinrichtung zu dem spezifischen elektrischen Widerstand $\rho_{el,Schmelze}$ der Schmelze einen Wert von 1 bis 20 aufweist.

Gemäß einer besonders bevorzugten Ausführungsform weist dabei das Verhältnis des den spezifischen elektrischen Widerstandes $\rho_{el,Feuerfest}$ des zumindest einen Feuerfestmaterials der Wand und/oder des zumindest einen Feuerfestmaterials des Elektrodensteins und/oder des zumindest einen Feuerfestmaterials der Isoliereinrichtung zu dem spezifischen elektrischen Widerstand $\rho_{el}$, schmelze der Schmelze einen Wert von 1,5 bis 5 auf.

Die Anwendung eines Abschirmkorbes ermöglicht im Vergleich zu der Isoliereinrichtung einen weniger empfindlichen Aufbau der erfindungsgemäßen Abschirmeinrichtung. Daher sind für die Ausführungsform mit Abschirmkorb kleinere untere Grenzwerte und damit ein größerer Bereich für den Parameter $\rho_{el,Feuerfest}/\rho_{el,Schmelze}$ möglich. Vorteilhafterweise steht somit eine breitere Materialauswahl für die Feuerfestmaterialien bei einer gegebenen Schmelze zur Verfügung.

Die Erfindung umfasst dabei auch die Möglichkeit, in vorteilhafter Weise eine Kombination aus Elektrodenstein und Isoliereinrichtung mit einem Abschirmkorb zu realisieren, um damit die Anzahl möglicher Parameter zum Einstellen einer optimalen räumlichen Verteilung des elektrischen Wärmeleistungseintrags zu erhöhen.

Für einen effizienten Betrieb des Schmelz- und/oder Läuteraggregats liegt erfindungsgemäß, die Temperatur T vorteilhafter Weise bei einem Wert im Bereich von $500°C \leq T \leq 3000°C$. Bei einer besonders bevorzugten Ausführungsform hat die Temperatur T einen Wert im Bereich von $800°C \leq T \leq 1900°C$. Die Temperaturangabe bezieht sich auf die Komponenten, welche erwärmt werden, also insbesondere auf die Schmelze, die Wanne, die Elektrode und die Abschirmeinrichtung.

Die Strombelastung i weist erfindungsgemäß einen Wert von $0{,}05$ A/cm$^2 \leq i \leq 20$ A/cm$^2$ auf. Die Angabe der Strombelastung bezieht sich auf Metallteile, also insbesondere auf die Elektrode und/oder den Abschirmkorb und/oder den Zwischenraum Elektrode Abschirmkorb.

Durch die Erfindung werden in vorteilhafter Weise besonders hohe Strombelastungen i ermöglicht. Bei einer besonders bevorzugten Ausführungsform hat die Strombelastung i einen Wert im Bereich von $0,1\ A/cm^2 \leq i \leq 3\ A/cm^2$.

Um die erfindungsgemäße Vorrichtung zum Vermindern des lokalen Wärmeleistungseintrags in zumindest einem der Elektrode benachbarten Bereich der Wand möglichst vielseitig einsetzbar zu machen, sieht die Erfindung in vorteilhafter Weise vor, dass die zumindest eine Elektrode eine Bodenelektrode und/oder eine Seitenelektrode und/oder eine Topelektrode ist.

Die Erfindung bezieht sich des Weiteren auf das Verwenden einer Vorrichtung zum Vermindern des lokalen Wärmeleistungseintrags in zumindest einem der Elektrode benachbarten Bereich der Wand, wobei die Vorrichtung insbesondere wie oben beschrieben ausgeführt ist, beim Betrieb eines Aggregats für konduktiv beheizbare Schmelzen insbesondere für Glasschmelzen.

Die Erfindung wird nachfolgend unter Bezugnahme auf die beigefügten Zeichnungen anhand von Ausführungsbeispielen näher erläutert. Dieselben Bauteile werden dabei mit denselben Bezugszeichen gekennzeichnet.

Es zeigen:

Fig. 1   eine schematische Darstellung eines Ausschnitts aus einer Wand eines Schmelz- und/oder Läuteraggregats mit einer Elektrode,

Fig. 2   Leistungsdichteverteilung um eine Elektrode an der der Schmelze zugewandten Oberfläche der Wand des Schmelz- und/oder Läuteraggregats,

Fig. 3   Leistungsdichteverteilung um eine Elektrode in 5 cm Tiefe gemessen von der Oberfläche der der Schmelze zugewandten Seite der Wand des Schmelz- und/oder Läuteraggregats,

Fig. 4   eine schematische Darstellung eines Elektrodensteins im Längsschnitt,

Fig. 5   eine schematische Darstellung einer Abschirmeinrichtung gemäß einer ersten Ausführungsform im Längsschnitt,

Fig. 6   eine schematische Darstellung einer erfindungsgemäßen Abschirmeinrichtung gemäß einer zweiten Ausführungsform im Längsschnitt sowie in Aufsicht,

Fig. 7   eine schematische Darstellung einer erfindungsgemäßen Abschirmeinrichtung gemäß einer weiteren Ausführungsform im Längsschnitt sowie in Aufsicht,

Fig. 8   eine schematische Darstellung der geometrischen Dimensionen der erfindungsgemäßen Abschirmeinrichtung.

In Fig. 1 ist ein typischer Aufbau einer Elektrode zum Beheizen konduktiv beheizbarer Schmelzen am Beispiel einer Glasschmelze dargestellt. In einer Wand 10 eines Schmelz- und/oder Läuteraggregats ist die Elektrode 20 in eine Öffnung derart eingesetzt, dass über sie elektrischer Strom in eine Glasschmelze 30 eingespeist werden kann.

Die Elektrode 20 besteht aus einem insbesondere wassergekühlten Elektrodenhalter, in dem in geeigneter Form der eigentliche Elektrodenkörper befestigt ist. Der Elektrodenhalter ist außen über ein Kabel mit einem Heizkreistransformator verbunden. Die Elektrode 20 aus Elektrodenhalter und Elektrodenkörper wird durch die aus feuerfesten Materialien aufgebaute Wand 10 in die Schmelze 30 eingeführt, wobei die Setztiefe von der jeweiligen Glasart bestimmt wird. In diesem Zusammenhang sind insbesondere die Verglasungs- und Kristallisationseigenschaften, die erforderlichen Prozesstemperaturen und die Wärmeleitfähigkeit des' Materials der Wand 10 von Bedeutung.

Kurve 1 im Diagramm in Fig. 2 zeigt den Leistungsdichteverlauf um eine Elektrode 20 in einer Wand 10 direkt an der der Glasschmelze 30 zugewandten Oberfläche 18 der Wand 10. Aufgetragen ist die Leistungsdichte in $W/m^3$ über dem Abstand in m von der Elektrode 20. Dargestellt ist der Bereich um eine Elektrode E1 für eine Anordnung, bei welcher sich in Richtung der positiv gezählten Abstände, das heißt im Diagramm nach rechts, eine zweite Elektrode E2 befindet. Die eingetragenen Werte sind das Ergebnis einer mathematischen Simulation der Elektrodenumgebung, bei der für die spezifischen elektrischen Widerstände $\rho_{elFeuerfest} = 2,5\ \rho_{elGlas}$ ; ($\rho_{elGlas} = 20\ \Omega$ cm) als Randbedingungen vorgegeben wurde.

In unmittelbarer Umgebung der Elektrode E1 wird die größte Leistungsdichte in das umgebene Material eingetragen. Entsprechend werden in diesen Bereichen die höchsten Energiedichten und damit die größten Temperaturen auftreten. Mit zunehmendem Abstand von der Elektrode nimmt die Leistungsdichte deutlich ab. Bereits nach etwa 4 cm ist sie auf ca. die Hälfte ihres ursprünglichen Wertes gesunken. Das bedeutet, dass in der Umgebung der Elektrode bei herkömmlichem Betrieb der Anlage extrem hohe Gradienten der Leistungsdichte und damit der mit der Leistungsdichte verbundenen Größen auftreten. Besonders viel Energie wird dabei in dem Bereich der Hauptstromrichtung, also auf der der benachbarten Elektrode E2 zugewandten Seite der Elektrode E1, im Diagramm rechts, freigesetzt.

Im Diagramm in Fig. 3 sind die entsprechenden Daten zum Leistungsdichteverlauf um eine Elektrode E1 in 5 cm Tiefe gerechnet von der mit der Schmelze in Kontakt stehenden Oberfläche 18 der Wand 10 dargestellt. Wie die Daten von Kurve 1 belegen, werden auch 5 cm innerhalb der Wand 10 in unmittelbarer Umgebung der Elektrode die höchsten Werte für die Leistungsdichte erzielt.

Der starke Abfall der Leistungsdichte mit abnehmendem Abstand zur Elektrode E1 bei Abständen unterhalb von etwa 5 cm ist neben dem höheren spezifischen Widerstand des Elektrodensteinmaterials im Vergleich zu der Glasschmelze auch auf die Kühlung der Elektrode, insbesondere die Wasserkühlung des Elektrodenhalters und eine mögliche Zwangskonvektion von Kühlluft an der Außenseite des Elektrodensteins zurückzuführen. Wie Kurve 1 zeigt, reichen diese Maßnahmen zur Kühlung jedoch nicht aus, bei herkömmlicher Anordnung starke Gradienten der Leistungsdichte in Nachbarschaft zur Elektrode abzubauen.

Um die Gefahr von Zerstörungen im Feuerfestmaterial der Wand 10, insbesondere durch Rissbildung und Korrosion herabzusetzen, werden lokale Unterschiede in der räumlichen Verteilung des Leistungseintrags in die Wand abgebaut. Gemäß einer ersten Ausführungsform wird dazu eine Abschirmeinrichtung eingesetzt, welche in einem der Elektrode 20 benachbarten Bereich der Wand 10 angeordnet ist.

Fig. 4 zeigt einen herkömmlichen Aufbau eines Elektrodensteins 11. Üblicherweise sind Elektrodensteine in Form eines monolithischen Blockes ausgeführt. Demgegenüber sieht die Erfindung, wie in Fig. 5 dargestellt, vor, dass die Abschirmeinrichtung 15 gemäß einer ersten Ausführungsform einen Elektrodenstein 11 aufweist, welcher von einer Isoliereinrichtung gehalten wird.

Im dargestellten Beispiel besteht die Isoliereinrichtung aus einer ersten Schicht 12, welche auch als Halterung für den Elektrodenstein 11 dient, und einer zweiten Schicht 13, welche mit den beiden Schichten des Elektrodensteins 11 und der ersten Isolierschicht 12 einen sandwichartigen Aufbau bildet.

Die um den eigentlichen Elektrodenstein 11 liegenden Feuerfestmaterialien 12 und 13 dienen als thermische Isolation und reduzieren dadurch den Temperaturgradienten im Material des eigentlichen Elektrodensteins 11. Da die Materialien der Schichten 12 und 13 zusätzlich eine Tragefunktion erfüllen, führen unter Umständen auftretende Risse im Elektrodenstein 11 bei dem erfindungsgemäßen Aufbau in vorteilhafter Weise nicht zu einem Ausfall des kompletten Systems.

Für das Feuerfestmaterial 12 kann ein Material verwendet werden, welches eine gute Temperaturwechselbeständigkeit aufweist. In der Regel steht eine Auswahl an Materialien zur Verfügung, die zusätzlich korrosionsbeständig gegenüber den verwendeten Glasschmelzen 30 sind. Das Material 12 kann zudem eine bedeutend höhere elektrische Leitfähigkeit, also einen verminderten spezifischen elektrischen Widerstand aufweisen, als das Material des eigentlichen Elektrodensteins 11, da es weiter von der Elektrode 20 entfernt plaziert ist. Die einzige Einschränkung für das Material der Schicht 12 bildet die elektrische Leitfähigkeit der Glasschmelze.

Praktische Erfahrungen der Erfinder legen nahe, dass für einen sicheren Betrieb $\rho_{el, Feuerfest} = 1,5 \, \rho_{el,Glas}$ gegeben sein sollte. Die Dimension d wird so gewählt, dass der elektrische Feldgradient $\Delta E_{1,2}$ im Anschlussbereich der Materialien des Elektrodensteins 11 zur ersten Isolierschicht 12 einen Wert von etwa 4 bis 5 V/cm nicht überschreitet. Die Höhe des Elektrodensteins h wird generell mit 20 bis 300 mm gewählt. Die Breite des Spaltes b begrenzt den unteren Wert der Dimension d, wobei die Dimension d mindestens das Doppelte der Spaltbreite b beträgt.

Neben den oben beschriebenen Vorteilen einer Abschirmeinrichtung 15 bietet der in Fig. 5 dargestellte sandwichartige Aufbau den weiteren positiven Effekt, dass die schlecht leitfähigen Materialien, wie hier die Materialien des Elektrodensteins 11, in der Regel sehr teuer sind und bei einem minimierten Einsatz gemäß der Erfindung hohe Kosten eingespart werden können.

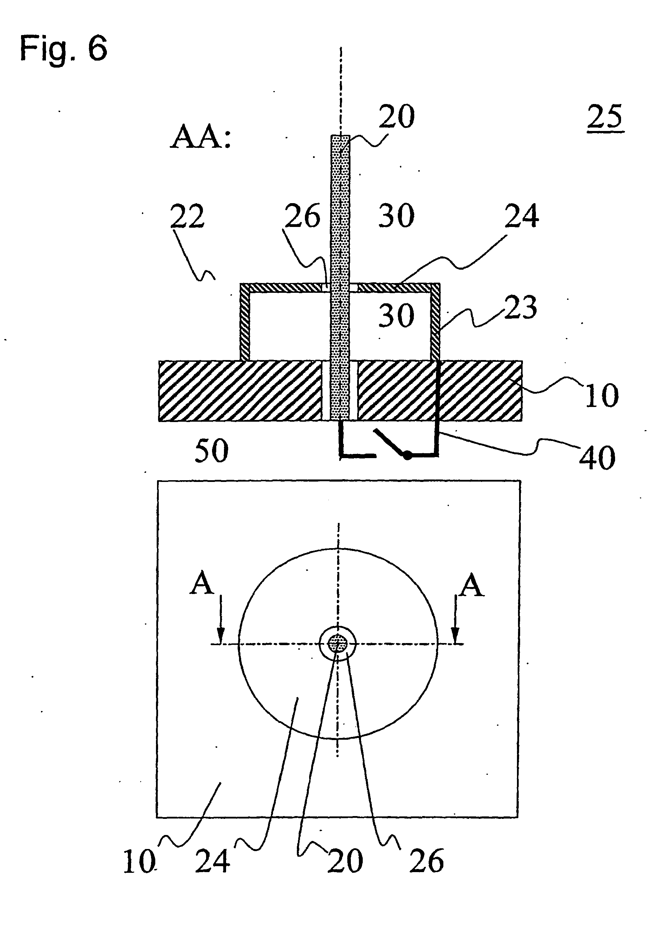

Fig. 6 zeigt eine schematische Darstellung einer Abschirmeinrichtung 25 gemäß der Erfindung, welche in einem der Elektrode 20 benachbarten Bereich der Schmelze 30 angeordnet ist.

Diese Abschirmeinrichtung 25 umfasst einen Abschirmkorb 22, welcher eine Öffnung 26 aufweist, durch die die Elektrode 20 hindurchgeführt werden kann. Die Öffnung 26 des Abschirmkorbes 22 ist in einer oberen Begrenzung 24 des Abschirmkorbes angeordnet.

Im gezeigten Beispiel hat der Abschirmkorb 22 eine zylinderförmige Gestalt, wobei die Begrenzung 24 den Abschirmkorb 22 zur Schmelze 30 hin nach oben begrenzt, während die seitliche Begrenzung 23 den Abschirmkorb 22 radial von der Elektrode 20 aus gesehen abschließt. Bei dieser Ausführungsform ist die Schmelze 30 im Wesentlichen im Innern des Abschirmkorbes 22 eingeschlossen.

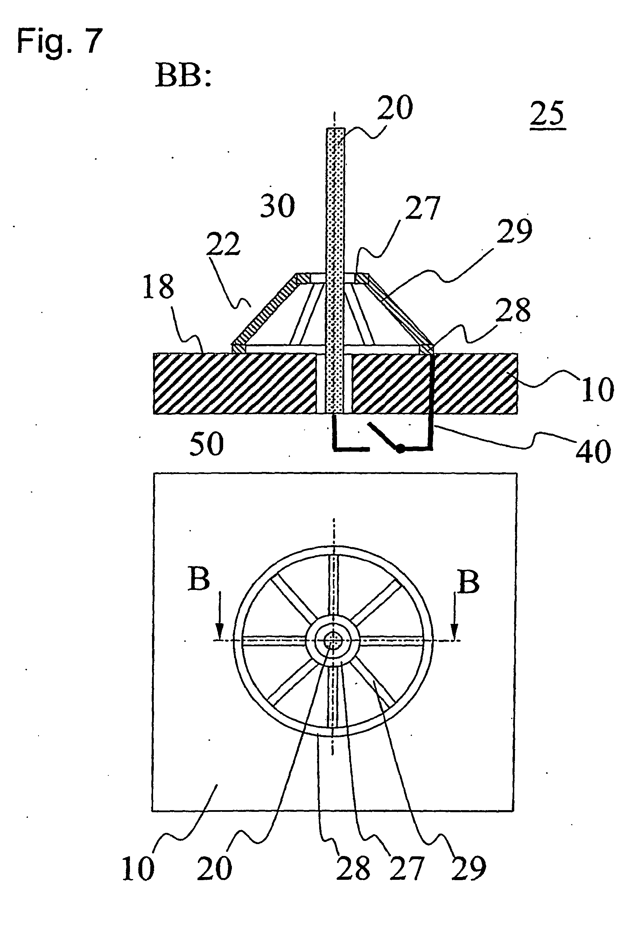

In Fig. 7 ist eine weitere Ausführungsform eines Abschirmkorbes dargestellt. Ein erster Rand 27 bildet die obere Begrenzung 24 des Abschirmkorbes. Ein zweiter Rand 28 bildet die untere Begrenzung des Abschirmkorbes 22. Beide Ränder 27 und 28 sind durch Stege 29 miteinander verbunden. Bei dieser Variante ist ein nahezu ungehinderter Austausch der Schmelze 30 aus dem Inneren des Abschirmkorbes 22 mit dem Bereich außerhalb des Abschirmkorbes 22 möglich.

Der hohe Gradient des elektrischen Feldes, der im unmittelbaren Bereich der Elektrode 20 auftritt, führt - wie in Kurve 1 der Diagramme in den Figuren 2 und 3 dargestellt - zu einer ungleichmäßigen Verteilung der Leistungsdichte und insbesondere zu einer Überhöhung des Leistungseintrags in diesem Bereich. Diese Überhöhung des Leistungseintrags kann durch den Einsatz eines erfindungsgemäßen Abschirmkorbes reduziert werden. Dies ist in den Kurven 2, 3 und 4 in den genannten Diagrammen verdeutlicht.

Die Simulationen der Ergebnisse, die in den Kurven 2, 3 und 4 dargestellt sind, wurden für eine Bauform des Abschirmkorbes 22 gemäß der Darstellung in Fig. 6 mit einem äußeren Durchmesser von 250 mm durchgeführt. Bei den Kurven 2, 3 und 4 wurde der Abstand der inneren Begrenzung der Öffnung 26 im Abschirmkorb zu der Elektrode variiert.

Ist die innere Begrenzung der Öffnung 26 des Abschirmkorbes 22 in einem Abstand von 28 mm von der Elektrode angeordnet (Kurve 4), ist bereits eine deutliche Reduzierung des lokalen Leistungsdichteeintrags in unmittelbarer Nachbarschaft der Elektrode um etwa ein Drittel des Wertes ohne Abschirmkorb gegeben. Wird der Abstand des inneren Randes der Öffnung 26 des Abschirmkorbes zur Elektrode weiter verringert (Kurve 3, Kurve 2), nimmt der Leistungsdichteeintrag in die unmittelbare Umgebung der Elektrode 20 weiter ab.

Bei einer direkten Befestigung des Abschirmkorbes 22 am Elektrodenstab erfolgt die höchste Energiereduktion im Vergleich zu einer Elektrode ohne Abschirmkorb in der direkten Umgebung der Elektrode 20 selbst. Dies wird durch die Kurve 2 in den Diagrammen in Fig. 2 und 3 verdeutlicht.

Der Gradient des elektrischen Feldes und damit die Leistungsdichte wird am äußeren Rand des Abschirmkorbes 22 verstärkt. Die in diesem Bereich freigesetzte Energie ist größer als bei der entsprechenden Anordnung ohne Korb 22. Dennoch beträgt auch dieser erhöhte Leistungseintrag nur einen Bruchteil der Werte, die in unmittelbarer Umgebung der Elektrode ohne Korb freigesetzt werden. Diese leichte Erhöhung der Leistungsdichte im Bereich der Korbaußenkante ist daher völlig unkritisch. Eine Gefahr für das Feuerfestmaterial der Wand 10 besteht nicht. Insbesondere steht in diesem Bereich ein größeres Volumen zur Verfügung, in dem die generierte Wärme abgegeben werden kann. Eine möglicherweise in das Feuerfestmaterial eingespeiste Energie kann somit rasch abgeleitet werden.

Muss die Möglichkeit eines Nachschiebens des Elektrodenkörpers gegeben bleiben, darf der Abschirmkorb 22 keinen direkten Kontakt zur Elektrode 20 besitzen. Ein Nachschieben des Elektrodenkörpers bietet den Vorteil, auf das Risiko des Abbrechens des Elektrodenstabes während des Betriebes oder auf Probleme mit dem Oxydationsschutz während des Auftempers der Anlage flexibel reagieren zu können. In diesem Fall muss ein bestimmter Abstand zwischen der Elektrodenstaboberfläche und der Innenkante der Korbes 22 eingehalten werden.

Das Problem einer zu hohen Stromdichte im Zwischenraum zwischen Abschirmkob 22 und Elektrode 20 kann man umgehen, wenn man den Abschirmkorb 22, wie in den Figuren in Gestalt einer möglichen elektrischen Verbindung 40, dargestellt, in geeigneter Weise durch die Wand 10 mit dem Außenbereich 50 verbindet.

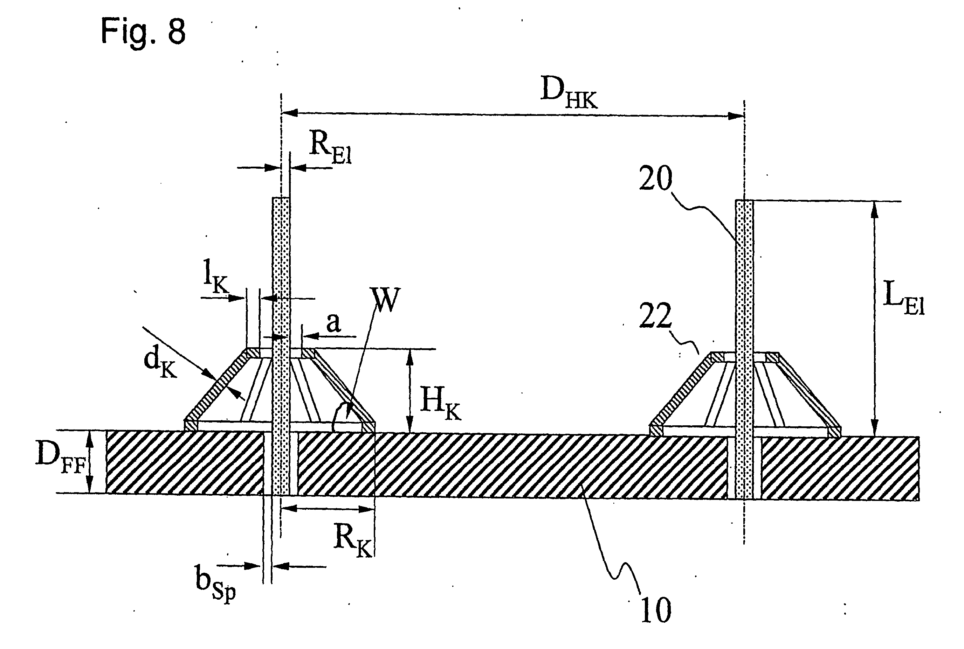

In Fig. 8 sind relevante geometrische Größen einer erfindungsgemäßen Anordnung der Abschirmeinrichtung 25 für zwei benachbarte Elektroden 20 dargestellt. Der oben genannte Abstand a zwischen der Elektrode 20 und der Innenkante des Korbes 22 ist in dieser Darstellung eingezeichnet. Je kleiner der Abstand a gewählt wird, um so höher werden jedoch die Stromdichten in diesem Übergangsbereich.

Der Strom fließt auf dem Weg des geringsten Widerstands von einer Elektrode E1 eines Heizkreises zur nächsten Elektrode E2. Daher sind bei der Wahl des Abstandes a die für die Glasqualität maximal zulässigen Stromdichten zu beachten. Für die Glasqualität spielen dabei insbesondere die Blasenbildung, die Glasauflösung sowie eine mögliche Korrosion des Materials der Elektrode und/oder des Abschirmkorbes eine Rolle.

Die beiden Elektroden 20 haben einen Abstand $D_{HK}$ voneinander, der die Länge des Heizkreises angibt. Ein Elektrodenkörper hat einen Radius $R_{el}$, und die Länge des Elektrodenkörpers im Glas beträgt $L_{el}$. Die Elektrode 20 ist in einer Öffnung der Wand 10 angeordnet, wobei die Breite des Spaltes zwischen Elektrodenkörper und der inneren Begrenzung der Öffnung in der Wand 10 mit $b_{SP}$ bezeichnet wird. Die Dicke des Feuerfestmaterials, welches mit der Glasschmelze in Kontakt steht, wird mit $D_{FF}$ bezeichnet.

Um die Elektrode 20 ist ein Abschirmkorb 22 angeordnet. Der äußere Radius des Abschirmkorbes beträgt $R_K$, welches gleichzeitig die größte Längsachse in Heizrichtung ist. Die Höhe des Abschirmkorbes beträgt $H_K$. Die Breite des oberen Randes des Abschirmkorbes 22, welcher auch als oberer Kragen bezeichnet wird, wird mit $I_K$ angegeben. Die Materialstärke der Komponenten des Abschirmkorbes 22 beträgt $d_K$. Die Längsachse der Elemente 29 schließt im gezeigten Ausführungsform einen Winkel W mit der der Schmelze 30 zugewandten Oberfläche 18 des der Elektrode 20 benachbarten Bereiches der Wand 10 ein.

**Patentansprüche**

1. Aggregat, insbesondere Schmelz- und/oder Läuteraggregat und/oder Verteilersystem und/oder Rinnensystem, für konduktiv beheizbare Schmelzen (30), insbesondere Glasschmelzen,
   welches eine Wanne und zumindest eine Elektrode (20) aufweist, wobei die Elektrode (20) durch eine öffnung in einer Wand (10) der Wanne hindurch in die konduktiv beheizbare Schmelze (30) eintaucht,
   und welches
   eine Vorrichtung zum Vermindern des lokalen Wärmeleistungseintrags in zumindest einen der Elektrode (20) benachbarten Bereich der Wand (10) umfasst,
   **dadurch gekennzeichnet, dass** die Vorrichtung zum Vermindern des lokalen wärmeleistungseintrags zumindest eine Abschirm-Einrichtung (15, 25) umfaßt, die in einem der Elektrode (20) benachbarten Bereich der Schmelze (30) angeordnet ist, und einen Abschirmkorb (22) umfaßt, welcher Mo und/oder W und/oder $SnO_2$ und/oder zumindest ein Edelmetall und/oder zumindest eine Legierung der vorgenannten Materialien und/oder hochwarmfoste Stähle umfaßt, und welcher eine Öffnung (26) aufweist, durch die die Elektrode (20) hindurchgeführt werden kann.

2.  Aggregat nach Anspruch 1, **dadurch gekennzeichnet, dass**
    das Lot durch die Öffnung (26) die Achse des Abschirmkorbes definiert.

3.  Aggregat nach einem der vorstehenden Ansprüche,
    **dadurch gekennzeichnet, dass**
    die Öffnung (26) des Abschirmkorbs (22) in einer oberen Begrenzung (24) des Abschirmkorbes (22) angeordnet ist.

4.  Aggregat nach einem der vorstehenden Ansprüche,
    **dadurch gekennzeichnet, dass**
    der Abschirmkorb (22) koaxial zu einer Elektrode (20) angeordnet ist.

5.  Aggregat nach einem der vorstehenden Ansprüche,
    **dadurch gekennzeichnet, dass**
    der Abschirmkorb (22) eine rotationssymmetrische Gestalt aufweist.

6.  Aggregat nach einem der vorstehenden Ansprüche,
    **dadurch gekennzeichnet, dass**
    die obere Begrenzung (24) des Abschirmkorbes (22) einstückig ist.

7.  Aggregat nach einem der vorstehenden Ansprüche,
    **dadurch gekennzeichnet, dass**
    der Abschirmkorb (22) zwei Ränder (27, 28) aufweist, welche durch Elemente (29) verbunden werden können, wobei zumindest ein Rand die obere Begrenzung (24) bildet.

8.  Aggregat nach einem der vorstehenden Ansprüche,
    **dadurch gekennzeichnet, dass**
    die Längsachse der Elemente (29) einen Winkel W mit der der Schmelze (30) zugewandten Oberfläche (18) des der Elektrode (20) benachbarten Bereiches der Wand (10) einschließt.

9.  Aggregat nach Anspruch 8,
    **dadurch gekennzeichnet, dass**
    der Winkel W einen Wert im Bereich vom $0° < W \leq 90°$ aufweist.

10. Aggregat nach Anspruch 9,
    **dadurch gekennzeichnet, dass**
    der Winkel W einen Wert im Bereich vom $30° \leq W \leq 60°$ aufweist.

11. Aggregat nach einem der vorstehenden Ansprüche,
    **dadurch gekennzeichnet, dass**
    der Abschirmkorb (22) an der Elektrode (20) befestigbar ist.

12. Aggregat nach einem der vorstehenden Ansprüche,
    **dadurch gekennzeichnet, dass**
    der Abschirmkorb (22) an der Wand (10) befestigbar ist.

13. Aggregat nach einem der vorstehenden Ansprüche,
    **dadurch gekennzeichnet, dass**
    das Verhältnis der Länge des in die Schmelze eintauchenden Elektrodenkörpers $L_{EK}$ zu der Höhe $H_K$ des Abschirmkorbes (22) einen Wert im Bereich von $1 \leq L_{EK}/H_K \leq 20$ aufweist.

14. Aggregat nach einem der vorstehenden Ansprüche,
    **dadurch gekennzeichnet, dass**
    das Verhältnis der Länge des in die Schmelze eintauchenden Elektrodenkörpers $L_{EK}$ zu der Höhe $H_K$ des Abschirmkorbes (22) einen Wert im Bereich von $2 \leq L_{EK}/H_K \leq 5$ aufweist.

15. Aggregat nach einem der vorstehenden Ansprüche,

**dadurch gekennzeichnet, dass**
das Verhältnis des äußeren Radius $R_K$ des Abschirmkorbes (22) zum Radius $R_{EL}$ des Elektrodenkörpers einen Wert im Bereich von $2 \leq R_K/R_{EL} \leq 15$ aufweist.

**16.** Aggregat nach einem der vorstehenden Ansprüche,
**dadurch gekennzeichnet, dass**
das Verhältnis des äußeren Radius $R_K$ des Abschirmkorbes (22) zum Radius $R_{EL}$ des Elektrodenkörpers einen Wert im Bereich von $3 \leq R_K/R_{EL} \leq 7$ aufweist.

**17.** Aggregat nach einem der vorstehenden Ansprüche,
**dadurch gekennzeichnet, dass**
das Verhältnis des Abstandes $D_{HK}$ zweier Elektroden zueinander zum äußeren Radius $R_K$ des Abschirmkorbes (22) einen Wert im Bereich von $3 \leq D_{HK}/R_K \leq 500$ aufweist.

**18.** Aggregat nach einem der vorstehenden Ansprüche,
**dadurch gekennzeichnet, dass**
das Verhältnis des Abstandes $D_{HK}$ zweier Elektroden zueinander zum äußeren Radius $R_K$ des Abschirmkorbes (22) einen Wert im Bereich von $20 \leq D_{HK}/R_K \leq 80$ aufweist.

**19.** Aggregat nach einem der vorstehenden Ansprüche,
**dadurch gekennzeichnet, dass**
die Breite $I_R$ des oberen Randes des Abschirmkorbes (22) einen Wert im Bereich von $0 \leq I_K \leq R_K$ aufweist.

**20.** Aggregat nach einem der vorstehenden Ansprüche,
**dadurch gekennzeichnet, dass**
die Breite $I_K$ des oberen Randes des Abschirmkorbes (22) einen Wert im Bereich von $0 \leq I_K \leq 1/3_1\,R_K$ aufweist.

**21.** Aggregat nach einem der vorstehenden Ansprüche,
**dadurch gekennzeichnet, dass**
die Breite a des Spaltes zwischen Elektrodenkörper und innerer Begrenzung der Öffnung (26) des Abschirmkorbes (22) einen Wert im Bereich von $0 \leq a \leq 50$ mm aufweist.

**22.** Aggregat nach einem der vorstehenden Ansprüche,
**dadurch gekennzeichnet, dass**
die Breite a des Spaltes zwischen Elektrodenkörper und innerer Begrenzung der Öffnung (26) des Abschirmkorbes (22) einen Wert im Bereich von $0 \leq a \leq 30$ mm aufweist.

**23.** Aggregat nach einem der vorstehenden Ansprüche,
**dadurch gekennzeichnet, dass**
die Materialstärke $d_K$ der Komponenten des Abschirmkorbes (22) einen Wert im Bereich von $5\,\text{mg} \leq d_K \leq 50\,\text{mm}$ aufweist.

**24.** Aggregat nach einem der vorstehenden Ansprüche,
**dadurch gekennzeichnet, dass**
die Breite $b_{Sp}$ des Spaltes zwischen Elektrodenkörper und innerer Begrenzung der Öffnung der Wand (10) einen Wert im Bereich von $1\,\text{mm} \leq b_{Sp} \leq 30\,\text{mm}$ aufweist.

**25.** Aggregat nach einem der vorstehenden Ansprüche,
**dadurch gekennzeichnet, dass**
die Breite $b_{Sp}$ des Spaltes zwischen Elektrödenkörper und innerer Begrenzung der Öffnung der Wand (10) einen Wert im Bereich von $2\,\text{mm} \leq b_{Sp} \leq 5\,\text{mm}$ aufweist.

**26.** Aggregat nach einem der vorstehenden Ansprüche,
**dadurch gekennzeichnet, dass**
die Dicke $D_{FF}$ des mit der Schmelze (30) in Kontakt stehenden Materials der Wand (10) einen Wert im Bereich von $50\,\text{mm} \leq D_{FF} \leq 500\,\text{mm}$ aufweist.

**27.** Aggregat nach einem der vorstehenden Ansprüche,

**dadurch gekennzeichnet, dass**
die Dicke $D_{FF}$ des mit der Schmelze (30) in Kontakt stehenden Materials der Wand (10) einen Wert im Bereich von 100 mm $\leq D_{FF} \leq$ 300 mm aufweist.

28. Verwendung einer Vorrichtung zum Vermindern des lokalen Wärmeleistungseintrags in zumindest einen der Elektrode (20) benachbarten Bereich der Wand (10) nach einem der vorangegangenen Ansprüche, beim Betrieb eines Aggregats für konduktiv beheizbare Schmelzen (30), insbesondere Glasschmelzen.

**Claims**

1. Unit, in particular a melting and/or refining unit and/or distribution system and/or channel system for conductively heatable melts (30), in particular glass melts, which comprises a trough and at least one electrode (20), wherein the electrode (20) passes through an opening in a wall (10) of the trough and is immersed in the conductively heatable melt (30),
and which includes an apparatus for reducing the local introduction of thermal output in at least one region of the wall (10) adjacent to the electrode (20), **characterised in that** the apparatus for reducing the local introduction of thermal output includes at least one shielding device (15, 25) which is disposed in a region of the melt (30) adjacent to the electrode (20) and includes a shielding basket (22) which includes Mo and/or W and/or $SnO_2$ and/or at least one noble metal and/or at least one alloy of the above-mentioned materials and/or high-temperature steels and which comprises an opening (26) through which the electrode (20) can pass.

2. Unit as claimed in Claim 1, **characterised in that** the perpendicular through the opening (26) defines the axis of the shielding basket.

3. Unit as claimed in any one of the preceding Claims, **characterised in that** the opening (26) of the shielding basket (22) is disposed in an upper boundary (24) of the shielding basket (22).

4. Unit as claimed in any one of the preceding Claims, **characterised in that** the shielding basket (22) is disposed coaxially with respect to an electrode (20).

5. Unit as claimed in any one of the preceding Claims, **characterised in that** the shielding basket (22) has a rotationally-symmetrical shape.

6. Unit as claimed in any one of the preceding Claims, **characterised in that** the upper boundary (24) of the shielding basket (22) is formed as one piece.

7. Unit as claimed in any one of the preceding Claims, **characterised in that** the shielding basket (22) comprises two edges (27, 28) which can be connected together by elements (29), wherein at least one edge forms the upper boundary (24).

8. Unit as claimed in any one of the preceding Claims, **characterised in that** the longitudinal axis of the elements (29) forms an angle W with the surface (18), facing the melt (30), of the region of the wall (10) adjacent to the electrode (20).

9. Unit as claimed in Claim 8, **characterised in that** the angle W is in the range of $0° < W \leq 90°$.

10. Unit as claimed in Claim 9, **characterised in that** the angle W is in the range of $30° \leq W \leq 60°$.

11. Unit as claimed in any one of the preceding Claims, **characterised in that** the shielding basket (22) can be attached to the electrode (20).

12. Unit as claimed in any one of the preceding Claims, **characterised in that** the shielding basket (22) can be attached to the wall (10).

13. Unit as claimed in any one of the preceding Claims, **characterised in that** the ratio of the length of the electrode body $L_{EK}$ immersed in the melt to the height $H_K$ of the shielding basket (22) is in the range of $1 \leq L_{EK}/H_K \leq 20$.

**14.** Unit as claimed in any one of the preceding Claims, **characterised in that** the ratio of the length of the electrode body $L_{EK}$ immersed in the melt to the height $H_K$ of the shielding basket (22) is in the range of $2 \leq L_{EK}/H_K \leq 5$.

**15.** Unit as claimed in any one of the preceding Claims, **characterised in that** the ratio of the outer radius $R_K$ of the shielding basket (22) to the radius $R_{EL}$ of the electrode body is in the range of $2 \leq R_K/R_{EL} \leq 15$.

**16.** Unit as claimed in any one of the preceding Claims, **characterised in that** the ratio of the outer radius $R_K$ of the shielding basket (22) to the radius $R_{EL}$ of the electrode body is in the range of $3 \leq R_K/R_{EL} \leq 7$.

**17.** Unit as claimed in any one of the preceding Claims, **characterised in that** the ratio of the distance $D_{HK}$ between two electrodes to the outer radius $R_K$ of the shielding basket (22) is in the range of $3 \leq D_{HK}/R_K \leq 500$.

**18.** Unit as claimed in any one of the preceding Claims, **characterised in that** the ratio of the distance $D_{HK}$ between two electrodes to the outer radius $R_K$ of the shielding basket (22) is in the range of $20 \leq D_{HK}/R_K \leq 80$.

**19.** Unit as claimed in any one of the preceding Claims, **characterised in that** the width $I_K$ of the upper edge of the shielding basket (22) is in the range of $0 \leq I_K \leq R_K$.

**20.** Unit as claimed in any one of the preceding Claims, **characterised in that** the width $I_K$ of the upper edge of the shielding basket (22) is in the range of $0 \leq I_K \leq 1/3 \,_1 R_K$.

**21.** Unit as claimed in any one of the preceding Claims, **characterised in that** the width a of the gap between the electrode body and the inner delimitation of the opening (26) of the shielding basket (22) is in the range of $0 \leq a \leq 50$ mm.

**22.** Unit as claimed in any one of the preceding Claims, **characterised in that** the width a of the gap between the electrode body and the inner delimitation of the opening (26) of the shielding basket (22) is in the range of $0 \leq a \leq 30$ mm.

**23.** Unit as claimed in any one of the preceding Claims, **characterised in that** the material thickness $d_K$ of the components of the shielding basket (22) is in the range of $5 \text{ mm} \leq d_K \leq 50$ mm.

**24.** Unit as claimed in any one of the preceding Claims, **characterised in that** the width $b_{Sp}$ of the gap between the electrode body and the inner delimitation of the opening of the wall (10) is in the range of $1 \text{ mm} \leq b_{Sp} \leq 30$ mm.

**25.** Unit as claimed in any one of the preceding Claims, **characterised in that** the width $b_{Sp}$ of the gap between the electrode body and the inner delimitation of the opening of the wall (10) is in the range of $2 \text{ mm} \leq b_{Sp} \leq 5$ mm.

**26.** Unit as claimed in any one of the preceding Claims, **characterised in that** the thickness $D_{FF}$ of the material of the wall (10) in contact with the melt (30) is in the range of $50 \text{ mm} \leq D_{FF} \leq 500$ mm.

**27.** Unit as claimed in any one of the preceding Claims, **characterised in that** the thickness $D_{FF}$ of the material of the wall (10) in contact with the melt (30) is in the range of $100 \text{ mm} \leq D_{FF} \leq 300$ mm.

**28.** Use of an apparatus for reducing the local introduction of thermal output in at least one region of the wall (10) adjacent to the electrode (20) as claimed in any one of the preceding Claims in the case of the operation of a unit for conductively heatable melts (30), in particular glass melts.

**Revendications**

**1.** Groupe, en particulier groupe de fusion et/ou groupe d'affinage et/ou système répartiteur et/ou système de gouttière, pour des masses fondues (30) pouvant être chauffées par conduction, en particulier des masses fondues de verre, qui présente une cuve et au moins une électrode (20), l'électrode (20) plongeant à travers une ouverture dans une paroi (10) de la cuve dans la masse fondue (30) pouvant être chauffée par conduction, et qui comporte un dispositif pour réduire l'entraînement local de puissance calorifique dans au moins une zone, voisine de l'électrode (20), de la paroi (10), **caractérisé en ce que** le dispositif pour réduire l'entraînement local de puissance calorifique comporte au moins un dispositif de blindage (15, 25), qui est disposé dans une zone, voisine de l'électrode (20), de la masse fondue (30), et un panier de blindage (22), qui comporte du Mo et/ou du W et/ou du $SnO_2$ et/ou au moins un métal noble et/ou au moins un alliage des matériaux cités plus haut et/ou des aciers résistants à haute température, et lequel présente une ouverture (26), à travers laquelle l'électrode (20) peut être guidée.

**2.** Groupe selon la revendication 1, **caractérisé en ce que** la verticale passant par l'ouverture (26) définit l'axe du panier de blindage.

**3.** Groupe selon l'une quelconque des revendications précédentes, **caractérisé en ce que** l'ouverture (26) du panier de blindage (22) est disposée dans une délimitation supérieure (24) du panier de blindage (22).

**4.** Groupe selon l'une quelconque des revendications précédentes, **caractérisé en ce que** le panier de blindage (22) est disposé de façon coaxiale par rapport à une électrode (20).

**5.** Groupe selon l'une quelconque des revendications précédentes, **caractérisé en ce que** le panier de blindage (22) présente une forme à symétrie de rotation.

**6.** Groupe selon l'une quelconque des revendications précédentes, **caractérisé en ce que** la délimitation (24) supérieure du panier de blindage (22) est d'une seule pièce.

**7.** Groupe selon l'une quelconque des revendications précédentes, **caractérisé en ce que** le panier de blindage (22) présente deux bords (27, 28), qui peuvent être reliés par des éléments (29), au moins un bord formant la délimitation (24) supérieure.

**8.** Groupe selon l'une quelconque des revendications précédentes, **caractérisé en ce que** l'axe longitudinal des éléments (29) forme un angle W avec la surface (18), tournée vers la masse fondue (30), de la zone, voisine de l'électrode (20), de la paroi (10).

**9.** Groupe selon la revendication 8, **caractérisé en ce que** l'angle W présente une valeur située dans la plage suivante : $0° < W \leq 90°$.

**10.** Groupe selon la revendication 9, **caractérisé en ce que** l'angle W présente une valeur située dans la plage suivante : $30° \leq W \leq 60°$.

**11.** Groupe selon l'une quelconque des revendications précédentes, **caractérisé en ce que** le panier de blindage (22) peut être fixé sur l'électrode (20).

**12.** Groupe selon l'une quelconque des revendications précédentes, **caractérisé en ce que** le panier de blindage (22) peut être fixé sur la paroi (10).

**13.** Groupe selon l'une quelconque des revendications précédentes, **caractérisé en ce que** le rapport de la longueur du corps d'électrode $L_{EK}$ plongeant dans la masse fondue à la hauteur $H_K$ du panier de blindage (22) présente une valeur située dans la plage suivante: $1 \leq L_{EK}/H_K \leq 20$.

**14.** Groupe selon l'une quelconque des revendications précédentes, **caractérisé en ce que** le rapport de la longueur du corps d'électrode $L_{EK}$ plongé dans la masse fondue à la hauteur $H_K$ du panier de blindage (22) présente une valeur située dans la plage suivante : $2 \leq L_{EK}/H_K \leq 5$.

**15.** Groupe selon l'une quelconque des revendications précédentes, **caractérisé en ce que** le rapport du rayon extérieur $R_K$ du panier de blindage (22) au rayon $R_{EL}$ du corps d'électrode présente une valeur située dans la plage suivante : $2 \leq R_K/R_{EL} \leq 15$.

**16.** Groupe selon l'une quelconque des revendications précédentes, **caractérisé en ce que** le rapport du rayon extérieur $R_K$ du panier de blindage (22) au rayon $R_{EL}$ du corps d'électrode présente une valeur située dans la plage suivante : $3 \leq R_K/R_{EL} \leq 7$.

**17.** Groupe selon l'une quelconque des revendications précédentes, **caractérisé en ce que** le rapport d'espacement $D_{HK}$ des deux électrodes au rayon extérieur $R_K$ du panier de blindage (22) présente une valeur située dans la plage suivante : $3 \leq D_{HK}/R_K \leq 500$.

**18.** Groupe selon l'une quelconque des revendications précédentes, **caractérisé en ce que** le rapport d'espacement $D_{HK}$ des deux électrodes au rayon extérieur $R_K$ du panier de blindage (22) présente une valeur située dans la plage suivante : $20 \le D_{HK}/R_K \le 80$.

**19.** Groupe selon l'une quelconque des revendications précédentes, **caractérisé en ce que** la largeur $l_K$ du bord supérieur du panier de blindage (22) présente une valeur située dans la plage suivante : $0 \le l_K \le R_K$.

**20.** Groupe selon l'une quelconque des revendications précédentes, **caractérisé en ce que** la largeur $l_K$ du bord supérieur du panier de blindage (22) présente une valeur située dans la plage suivante : $0 \le l_K \le 1/3_1 R_K$.

**21.** Groupe selon l'une quelconque des revendications précédentes, **caractérisé en ce que** la largeur a de la fente entre le corps d'électrode et la délimitation intérieure de l'ouverture (26) du panier de blindage (22) présente une valeur située dans la plage suivante : $0 \le a \le 50$ mm.

**22.** Groupe selon l'une quelconque des revendications précédentes, **caractérisé en ce que** la largeur a de la fente entre le corps d'électrode et la délimitation intérieure de l'ouverture (26) du panier de blindage (22) présente une valeur située dans la plage suivante : $0 \le a \le 30$ mm.

**23.** Groupe selon l'une quelconque des revendications précédentes, **caractérisé en ce que** l'épaisseur du matériau $d_k$ des composants du panier de blindage (22) présente une valeur située dans la plage suivante : $5\,mm \le d_k \le 50\,mm$.

**24.** Groupe selon l'une quelconque des revendications précédentes, **caractérisé en ce que** la largeur $b_{sp}$ de la fente entre le corps d'électrode et la délimitation intérieure de l'ouverture de la paroi (10) présente une valeur située dans la plage suivante : $1\ mm \le b_{sp} \le 30$ mm.

**25.** Groupe selon l'une quelconque des revendications précédentes, **caractérisé en ce que** la largeur $b_{sp}$ de la fente entre le corps d'électrode et la délimitation intérieure de l'ouverture de la paroi (10) présente une valeur située dans la plage suivante : $2\ mm \le b_{sp} \le 5$ mm.

**26.** Groupe selon l'une quelconque des revendications précédentes, **caractérisé en ce que** l'épaisseur $D_{FF}$ du matériau, en contact avec la masse fondue (30), de la paroi (10) présente une valeur située dans la plage suivante : $50\ mm \le D_{FF} \le 500$ mm.

**27.** Groupe selon l'une quelconque des revendications précédentes, **caractérisé en ce que** l'épaisseur $D_{FF}$ du matériau, en contact avec la masse fondue (30), de la paroi (10) présente une valeur située dans la plage suivante : $100\ mm \le D_{FF} \le 300$ mm.

**28.** Utilisation d'un dispositif pour la réduction de l'entraînement local de la puissance calorifique dans au moins une zone, voisine de l'électrode (20), de la paroi (10) selon l'une quelconque des revendications précédentes, lors de l'exploitation d'un groupe pour des masses fondues (30) pouvant être chauffées par conduction, en particulier des masses fondues de verre.

## Fig. 1

20

Elektrodenkörper

30

Setztiefe

10  18

50

Elektrodenhalter mit Wasserkühlung

EP 1 671 518 B1

Fig. 2

# Fig. 3

**Leistungsdichteverlauf um eine Heizelektrode 5 cm im Feuerfestmaterial**

E1    E2

Leistungsdichte in [W/m³]

- Ohne Korb
- Mit Korb Kontakt
- Mit Korb 10 mm von Elektrode
- Mit Korb 28 mm von Elektrode

Elektrode E 1

5000
4500
4000
3500
3000
2500
2000
1500
1000
500
0

Kurve 1

Kurve 2

Kurve 3

Kurve 4

Korbaußenkante

-0,2  -0,18  -0,16  -0,14  -0,12  -0,1  -0,08  -0,06  -0,04  -0,02  0  0,02  0,04  0,06  0,08  0,1  0,12  0,14  0,16  0,18  0,2

Abstände in [m]

## Fig. 4

## Fig. 5

# Fig. 6

AA:

Fig. 7

Fig. 8

**EP 1 671 518 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4819247 A